(19) **Europäisches Patentamt / European Patent Office / Office européen des brevets**

(11) **EP 4 402 608 B1**

(12) **EUROPEAN PATENT SPECIFICATION**

(45) Date of publication and mention
of the grant of the patent:
**21.05.2025 Bulletin 2025/21**

(21) Application number: **23754880.5**

(22) Date of filing: **12.07.2023**

(51) International Patent Classification (IPC):
**G06N 3/0455** (2023.01)   **G06N 3/088** (2023.01)
**G06N 3/042** (2023.01)   **G05B 13/02** (2006.01)

(52) Cooperative Patent Classification (CPC):
**G06N 3/0455; G05B 13/027; G06N 3/042;
G06N 3/088**

(86) International application number:
**PCT/JP2023/026484**

(87) International publication number:
**WO 2024/095540 (10.05.2024 Gazette 2024/19)**

(54) **SYSTEM AND METHOD FOR TRAINING OF NEURAL NETWORK MODEL FOR CONTROL OF HIGH DIMENSIONAL PHYSICAL SYSTEMS**

SYSTEM UND VERFAHREN ZUM TRAINIEREN EINES NEURONALEN NETZWERKMODELLS ZUR STEUERUNG VON HOCHDIMENSIONALEN PHYSIKALISCHEN SYSTEMEN

SYSTÈME ET PROCÉDÉ D'ENTRAÎNEMENT D'UN MODÈLE DE RÉSEAU NEURONAL POUR COMMANDER DES SYSTÈMES PHYSIQUES DE GRANDE DIMENSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.11.2022 US 202218052092**

(43) Date of publication of application:
**24.07.2024 Bulletin 2024/30**

(73) Proprietor: **Mitsubishi Electric Corporation
Tokyo 100-8310 (JP)**

(72) Inventors:
• **NABI, Saleh**
  **Cambridge, Massachusetts 02139-1955 (US)**
• **MANSOUR, Hassan**
  **Cambridge, Massachusetts 02139-1955 (US)**
• **BENOSMAN, Mouhacine**
  **Cambridge, Massachusetts 02139-1955 (US)**
• **LIU, Yuying**
  **Cambridge, Massachusetts 02139-1955 (US)**

(74) Representative: **Pfenning, Meinig & Partner mbB
Patent- und Rechtsanwälte
Joachimsthaler Straße 10-12
10719 Berlin (DE)**

(56) References cited:
**US-A1- 2021 042 454**

• **VRUSHABH ZINAGE ET AL: "Neural Koopman Lyapunov Control", ARXIV.ORG, CORNELL UNIVERSITY LIBRARY, 201 OLIN LIBRARY CORNELL UNIVERSITY ITHACA, NY 14853, 13 January 2022 (2022-01-13), XP091137228**
• **WANG SIFAN ET AL: "When and why PINNs fail to train: A neural tangent kernel perspective", JOURNAL OF COMPUTATIONAL PHYSICS, LONDON, GB, vol. 449, 11 October 2021 (2021-10-11), XP086879594, ISSN: 0021-9991, [retrieved on 20211011], DOI: 10.1016/ J.JCP.2021.110768**
• **ERICHSON N. BENJAMIN ET AL: "Physics-informed Autoencoders for Lyapunov-stable Fluid Flow Prediction", 26 May 2019 (2019-05-26), XP055790236, Retrieved from the Internet <URL:https://ml4physicalsciences.github.io/ 2019/files/NeurIPS_ML4PS_2019_28.pdf> [retrieved on 20210325]**

**(Cont. next page)**

- **KUTZ J NATHAN ET AL: "Parsimony as the ultimate regularizer for physics-informed machine learning", NONLINEAR DYNAMICS, KLUWER, DORDRECHT, NL, vol. 107, no. 3, 20 January 2022 (2022-01-20), pages 1801 - 1817, XP037692373, ISSN: 0924-090X, [retrieved on 20220120], DOI: 10.1007/S11071-021-07118-3**
- **BRUNTON STEVEN L ED  - XU FENG FENGXU@XJTU EDU CN ET AL: "Applying machine learning to study fluid mechanics", ACTA MECHANICA SINICA, SPRINGER BERLIN HEIDELBERG, BERLIN/HEIDELBERG, vol. 37, no. 12, 4 January 2022 (2022-01-04), pages 1718 - 1726, XP037807273, ISSN: 0567-7718, [retrieved on 20220104], DOI: 10.1007/S10409-021-01143-6**

**Description**

[Technical Field]

The present disclosure relates generally to system modeling, prediction and control, and more particularly to a system and a method of training a neural network model for control of high dimensional physical systems.

[Background Art]

Control theory in control systems engineering is a subfield of mathematics that deals with the control of continuously operating dynamical systems in engineered processes and machines. The objective is to develop a control policy for controlling such systems using a control action in an optimum manner without delay or overshoot and ensuring control stability.

Conventionally, some methods of controlling the system are based on techniques that allow a model-based design framework in which the system dynamics and constraints may directly be considered. Such methods may be used in many applications to control the systems, such as the dynamical systems of various complexities. Examples of such systems may include production lines, car engines, robots, numerically controlled machining, motors, satellites, and power generators.

Further, a model of dynamics of a system or a model of a system describes dynamics of the system using differential equations. However, in a number of situations, the model of the system may be nonlinear and may be difficult to design, to use in real-time, or it may be inaccurate. Examples of such cases are prevalent in certain applications such as robotics, building control, such as heating ventilating and air conditioning (HVAC) systems, smart grids, factory automation, transportation, self-tuning machines, and traffic networks. In addition, even if a nonlinear model may be available, designing an optimal controller for control of the system may essentially be a challenging task.

Moreover, in absence of accurate models of the dynamical systems, some control methods exploit operational data generated by dynamical systems in order to construct feedback control policies that stabilize the system dynamics or embed quantifiable control-relevant performance. Typically, different types of methods of controlling the system that utilize the operational data may be used. In an embodiment, a control method may first construct a model of the system and then leverage the model to design the controllers. However, such methods of control result in a black box design of a control policy that maps a state of the system directly to control commands. However, such a control policy is not designed in consideration of the physics of the system.

In another embodiment, a control method may directly construct control policies from the data without an intermediate model-building step for the system. A drawback of such control methods is potential requirement of large quantities of data in the model-building step. In addition, the controller is computed from an estimated model, e.g., according to a certainty equivalence principle, but in practice the models estimated from the data may not capture the physics of dynamics of the system. Hence, a number of control techniques for the system may not be used with constructed models of the system.

VRUSHABH ZINAGE ET AL: "Neural Koopman Lyapunov Control",ARXIV.ORG, CORNELL UNIVERSITY LIBRARY, 201 OLIN LIBRARY CORNELL UNIVERSITY ITHACA, NY 14853, 13 January 2022 (2022-01-13), proposes a framework to identify and construct bilinear models and their associated observables from data by simultaneously learning a bilinear Koopman embedding for the underlying unknown nonlinear control system as well as a Control Lyapunov Function (CLF) for the Koopman based bilinear model using a learner and falsifier.

[Summary of Invention]

The invention is defined in the appended independent claims. Embodiments of the invention are defined in the appended dependent claims.

[Brief Description of Drawings]

[Fig. 1A]

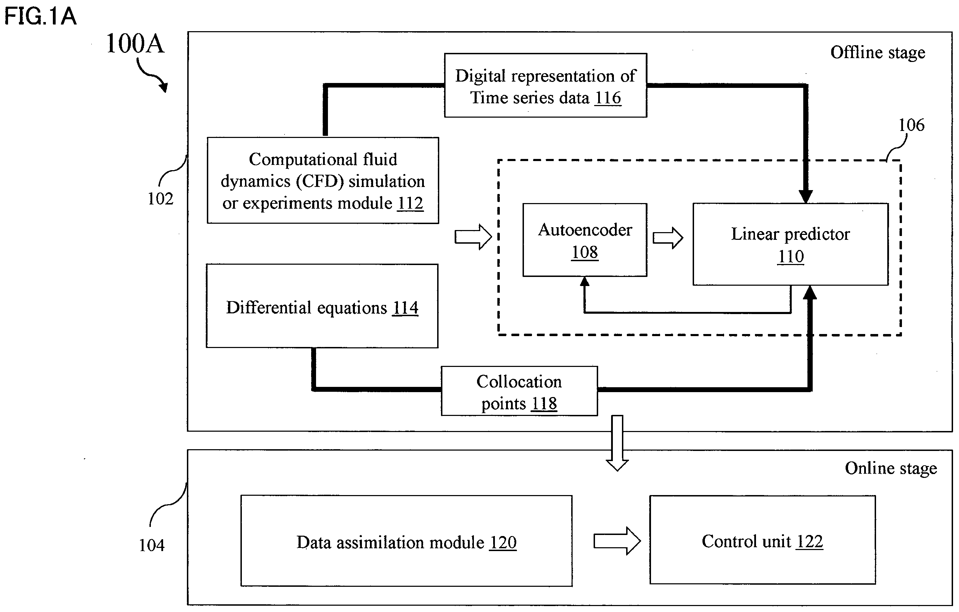

FIG. 1A shows a block diagram of two stages to train a neural network model in an offline stage to be used in an online stage of controlling an operation of a system, according to an embodiment of the present disclosure.
[Fig. 1B]

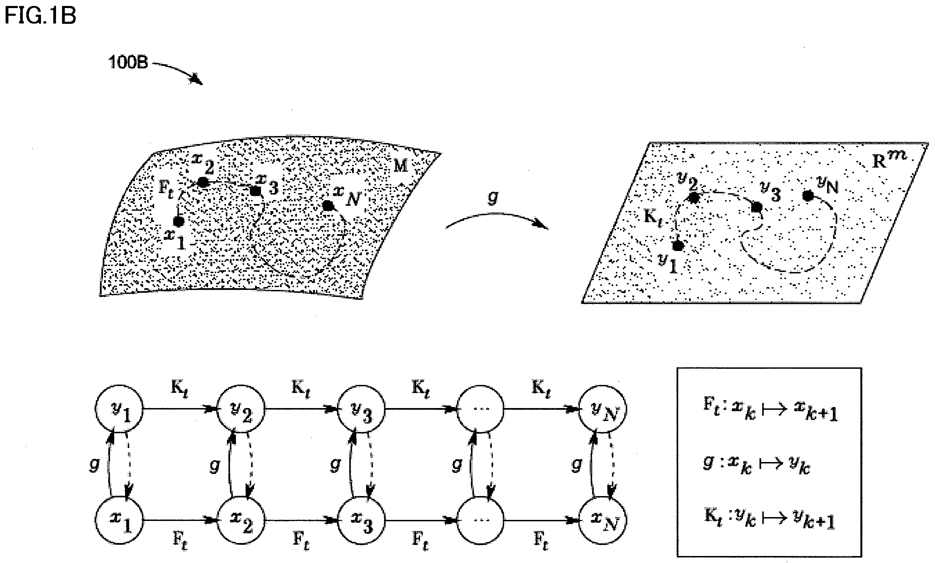

FIG. 1B shows a schematic diagram of architecture of a Koopman operator, according to some embodiments of the present disclosure.

[Fig. 2A]

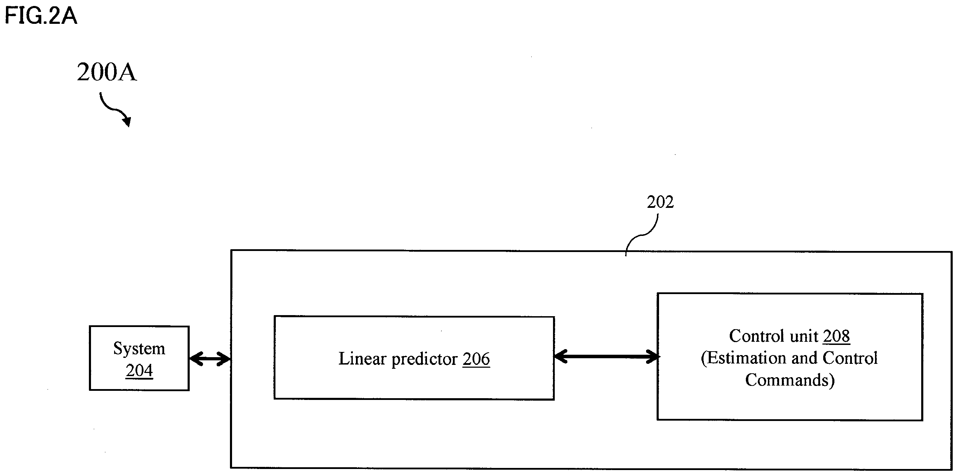

FIG. 2A illustrates a schematic overview of principles used for controlling the operation of the system, according to some embodiments of the present disclosure.

[Fig. 2B]

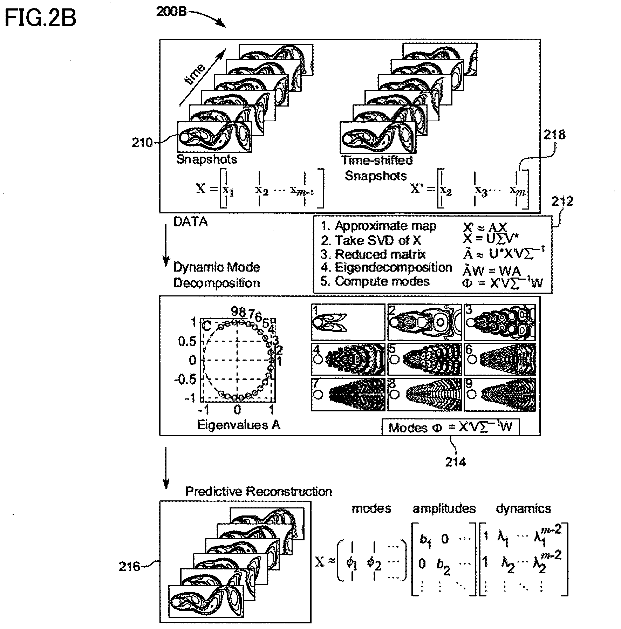

FIG. 2B illustrates a schematic diagram that depicts an exemplary method to approximate the Koopman operator, according to some embodiments of the present disclosure.

[Fig. 2C]

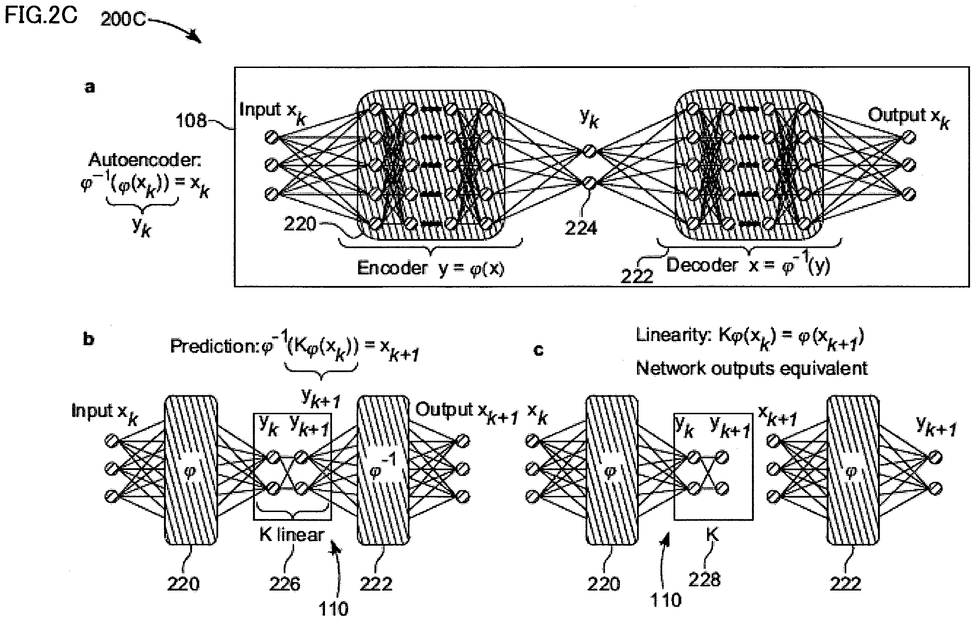

FIG. 2C illustrates a schematic diagram of an autoencoder architecture of the neural network model, according to some embodiments of the present disclosure.

[Fig. 3]

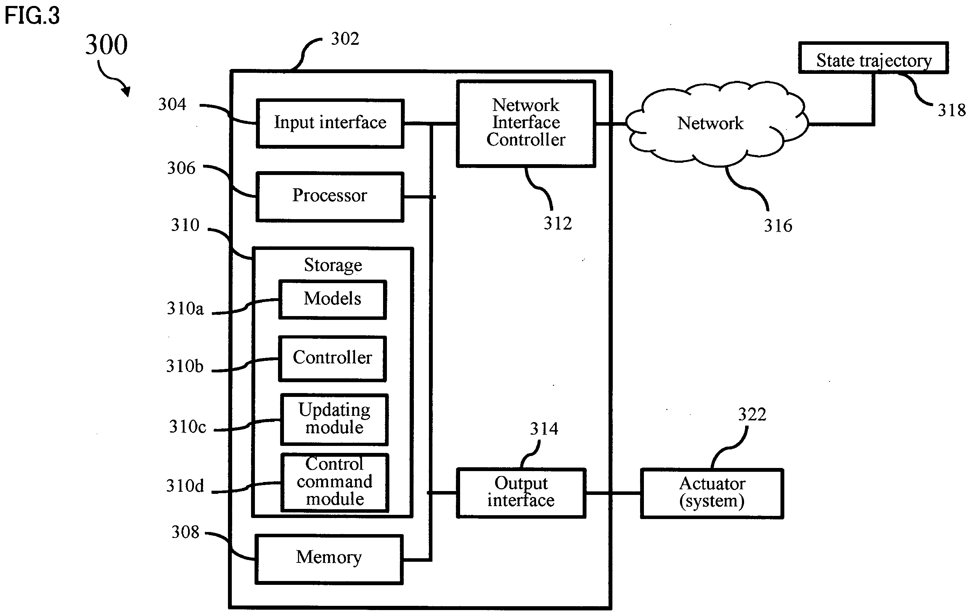

FIG. 3 illustrates a block diagram of an apparatus for controlling the operation of the system, according to some embodiments of the present disclosure.

[Fig. 4]

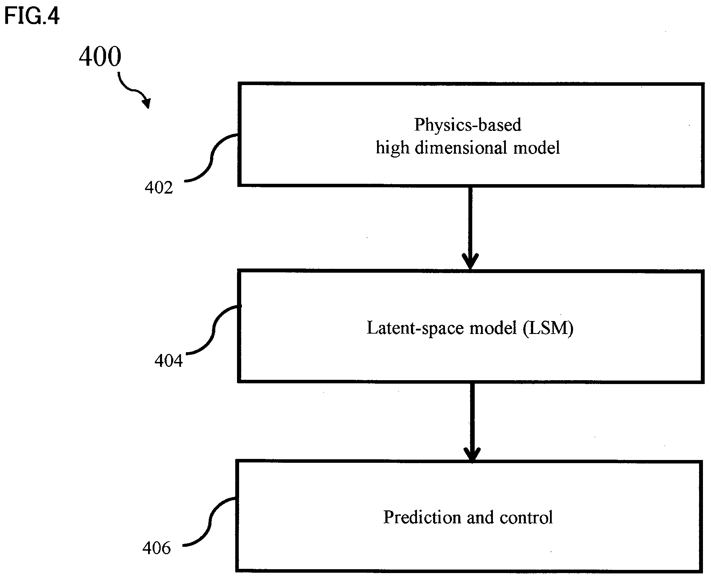

FIG. 4 illustrates a flowchart of principles for controlling the operation of the system, according to some embodiments of the present disclosure.

[Fig. 5]

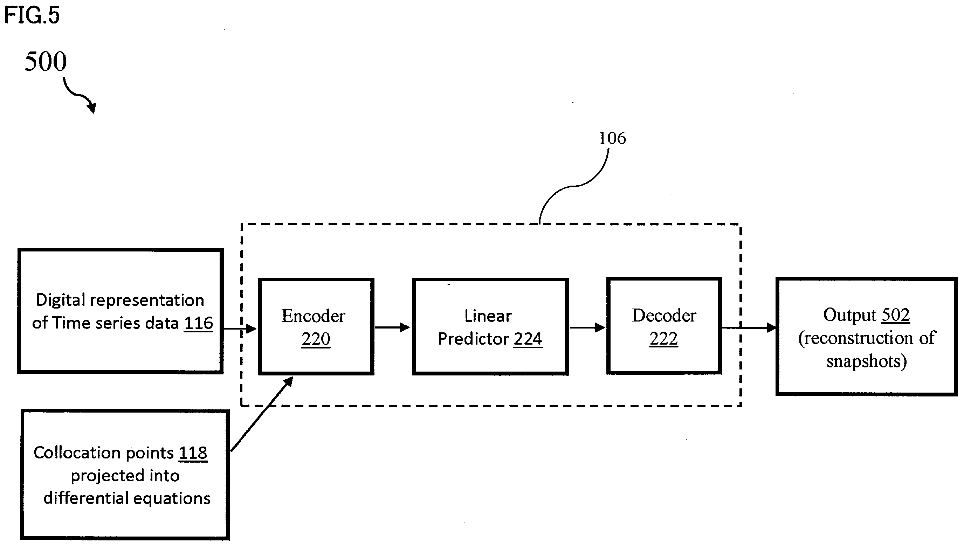

FIG. 5 illustrates a block diagram that depicts generation of a reduced order model, according to some embodiments of the present disclosure.

[Fig. 6]

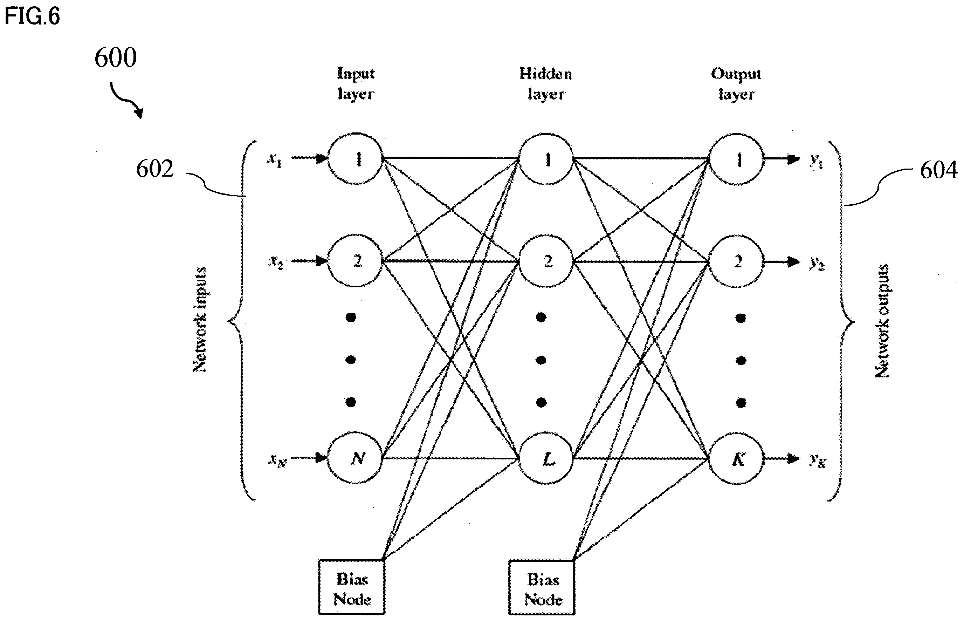

FIG. 6 illustrates a schematic diagram of the neural network model, according to some embodiments of the present disclosure.

[Fig. 7A]

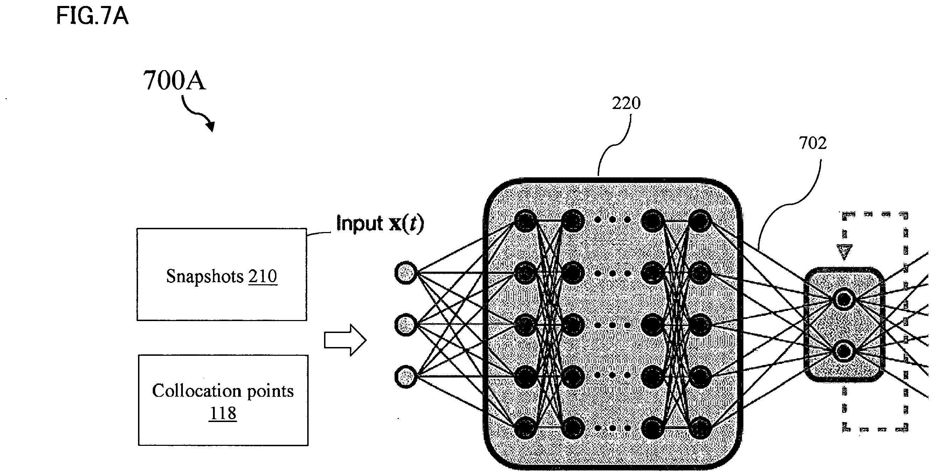

FIG. 7A illustrates a diagram that depicts input of the digital representation in an encoder of the neural network model, according to some embodiments of the present disclosure.

[Fig. 7B]

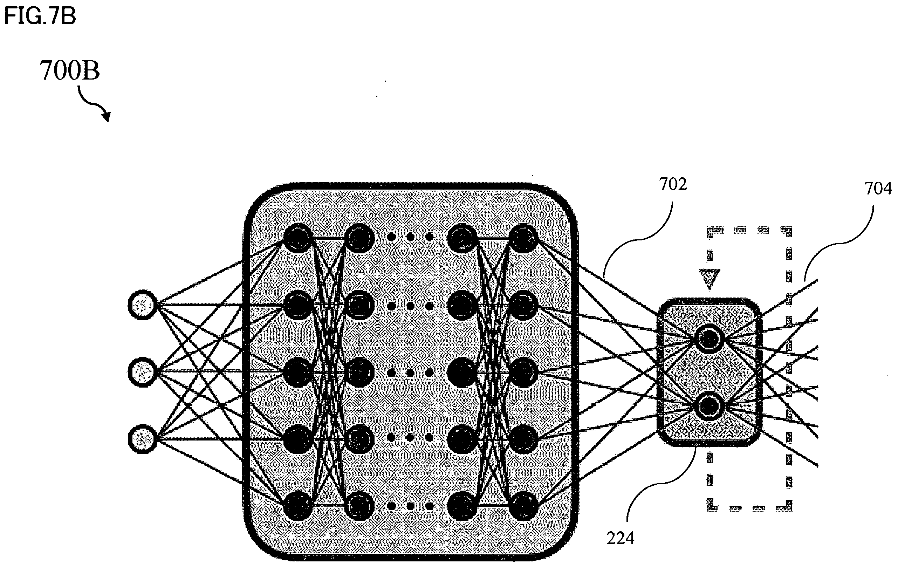

FIG. 7B illustrates a diagram that depicts propagation of the encoded digital representation into a latent space by a linear predictor of the neural network model, according to some embodiments of the present disclosure.

[Fig. 7C]

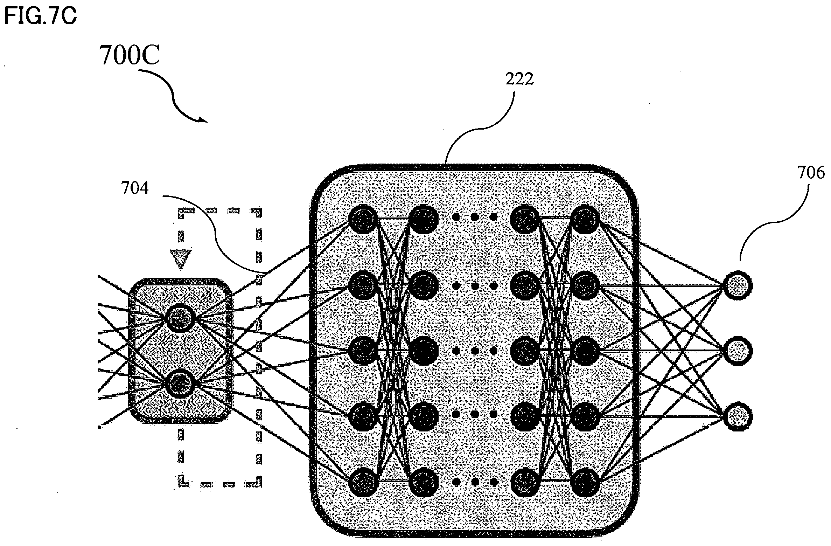

FIG. 7C illustrates a diagram depicting decoding of linearly transformed encoded digital representation by a decoder of the neural network model, according to some embodiments of the present disclosure.

[Fig. 8]

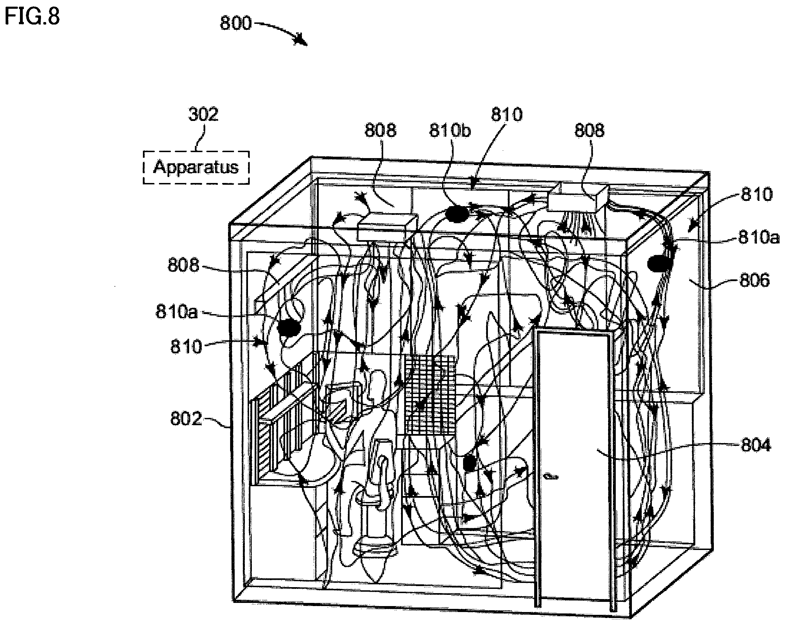

FIG. 8 illustrates an exemplar diagram for real-time implementation of the apparatus for controlling the operation of the system, according to some embodiments of the present disclosure.

[Fig. 9]

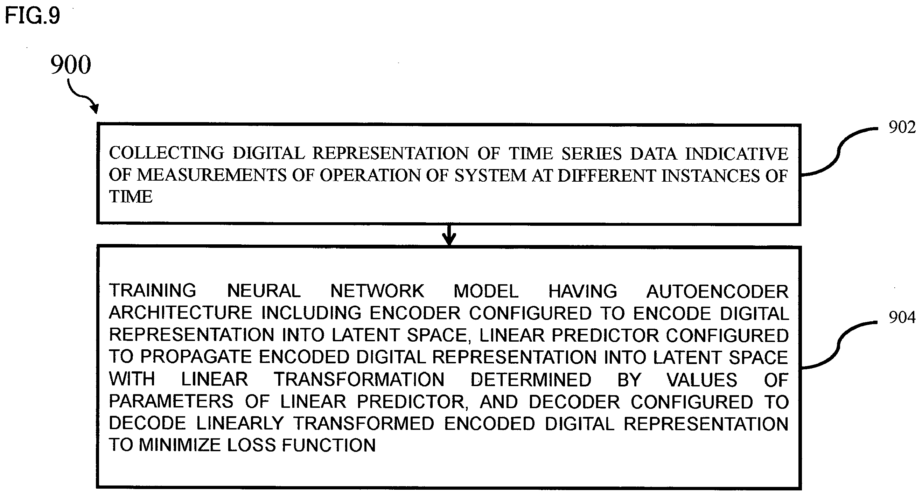

FIG. 9 illustrates a flow chart depicting a method for training the neural network model, according to some embodiments of the present disclosure.

[Description of Embodiments]

In describing embodiments of the disclosure, the following definitions are applicable throughout the present disclosure. A "control system" or a "controller" may be referred to a device or a set of devices to manage, command, direct or regulate the behavior of other devices or systems. The control system can be implemented by either software or hardware and can include one or several modules. The control system, including feedback loops, can be implemented using a microprocessor. The control system can be an embedded system.

An "air-conditioning system" or a heating, ventilating, and air-conditioning (HVAC) system may be referred to a system that uses a vapor compression cycle to move refrigerant through components of the system based on principles of thermodynamics, fluid mechanics, and/or heat transfer. The air-conditioning systems span a very broad set of systems, ranging from systems which supply only outdoor air to the occupants of a building, to systems which only control the temperature of a building, to systems which control the temperature and humidity.

A "central processing unit (CPU)" or a "processor" may be referred to a computer or a component of a computer that reads and executes software instructions. Further, a processor can be "at least one processor" or "one or more than one processor".

FIG. 1A shows a block diagram 100A of two stages to train a neural network model in an offline stage to be used in an online stage of controlling an operation of a system, according to an embodiment of the present disclosure. The block diagram 100A includes the two stages, such as an offline stage 102 and an online stage 104. The block diagram 100A depicts control and estimation of large-scale systems, such as the system having non-linear dynamics represented by partial differential equations (PDEs) using a two-stage apparatus, i.e., the offline stage 102 and the online stage 104.

The offline stage 102 (or a stage I) may include a neural network model 106. The neural network model 106 has an autoencoder architecture. The neural network model 106 comprises an autoencoder 108 that includes an encoder and a decoder. The neural network model 106 further comprises a linear predictor 110. The offline stage 102 may further include a computational fluid dynamics (CFD) simulation or experiments module 112, differential equations 114 for representation of the non-linear dynamics of the system, a digital representation of time series data 116 indicative of and collocation points 118. The online stage 104 (or a stage II) may include a data assimilation module 120 and a control unit 122 to control the system.

In the offline stage 102, an offline task for the control and estimation of the system may be carried out to derive the linear predictor 110. In some embodiments, the linear predictor 110 may be based on a reduced-order model. The reduced-order model may be represented by a Koopman operator. Such reduced-order model may be referred as a latent-space model. In general, the dimension of the latent space may be equal, larger or smaller than the input. Details of an architecture of the Koopman operator to represent the linear predictor 110 are further provided, for example, in FIG. 1B.

Typically, the latent-space model may be a nonlinear and a high-dimensional model. The present disclosure enables designing of the latent-space model that conforms to desired properties, such as linearity and being of reduced order. Moreover, data for development of latent-space model may be generated by performing high fidelity CFD simulation and experiments by use of the CFD simulation or experiments module 112.

Generally, the CFD refers to a branch of fluid mechanics that may utilize numerical analysis and data structures to analyze and solve problems that may involve fluid flows. For example, computers may be used to perform calculations required to simulate a free-stream flow of the fluid, and an interaction of the fluid (such as liquids and gases) with surfaces defined by boundary conditions. Further, multiple software have been designed that improves an accuracy and a speed of complex simulation scenarios associated with transonic or turbulent flows that may arise in applications of the system, such as the HVAC applications to describe the airflow in the system. Furthermore, initial validation of such software may typically be performed using apparatus such as wind tunnels. In addition, previously performed analytical or empirical analysis of a particular problem related to the airflow associated with the system may be used for comparison in the CFD simulations.

In some embodiments, the digital representation of the time series data 116 is obtained by use of the CFD simulation or experiments module 112. The CFD simulation or experiments module 112 may output a dataset, such as the digital representation of the time series data 116 that may be utilized to develop the latent-space model (or the linear predictor 110). The latent-space model may be constructed for several trajectories generated by the CFD simulations. The HVAC system may be installed in a room. The room may have various scenarios, such as a window may be open, a door may be closed, and the like. The CFD simulations may be performed for the room where the window is closed, the window is opened, the number of occupants is one, two or multiple, and the like. In such a case, the autoencoder 108 may be valid for all such conditions associated with the room. The tasks such as the CFD simulations may be carried in the offline stage 102.

In some embodiments, the collocation points 118 associated with a function space of the system, may be generated based on the PDE, the digital representation of time series data 116 and a linearly transformed encoded digital representation (such as an output of the linear predictor 110). The neural network model 106 may be trained based on the generated collocation points 118. Specifically, the neural network model 106 may be trained based on a difference between the prediction of the latent-space model and the dataset such as the digital representation of the time series data 116 plus a physics-informed part i.e., the differential equations 114 for representation of the non-linear dynamics of the system, which generates the collocation points 118.

Furthermore, an output of the neural network model 106 may be utilized by the data assimilation module 120 of the online stage 104. The data assimilation module 120 may output, for example, reconstructed models of temperature and velocity in an area, such as the room associated with the system, such as the HVAC system. The reconstructed models of temperature and velocity may be utilized by the control unit 122. The control unit 122 may generate control commands to control the operations (such as an airflow) of the system, such as the HVAC system.

The data assimilation module 120 utilizes a process of data assimilation that refers to assimilation of exact information from sensors with a possibly inexact model information. For example, the room may be installed with the sensors to monitor certain sensory data. Examples of the sensory data, installed within the room for the HVAC applications, include, but may not be limited to, thermocouple reading, thermal camera measurements, velocity sensor data, and humidity sensor data. The information from the sensors may be assimilated by the data assimilation module 120.

Typically, the data assimilation refers to a mathematical discipline that may seek to optimally combine predictions (usually in the form of a numerical model) with observations associated with the system. The data assimilation may be utilized for various goals, for example, to determine an optimal state estimate of the system, to determine initial conditions for a numerical forecast model of the system, to interpolate sparse observation data using knowledge of the system being observed, to identify numerical parameters of a model from observed experimental data, and the like. Depending on the goal, different solution methods may be used.

It may be noted that the offline stage 102 and the online stage 104 are examples of development of simplified and robust neural network model 106, that in turn may be used for estimation and control of the system having non-linear dynamics by the control unit 122. Typically, the estimation and control of the system involves estimating values of parameters of the linear predictor 110 based on measured empirical data that may have a random component. The parameters describe an underlying physical setting in such a way that the value of the parameter may affect distribution of the measured data. Moreover, an estimator, such as the control unit 122 attempts to approximate unknown parameters using the measurements. Generally, two approaches are considered for the approximation. A first approach is a probabilistic approach that may assume that the measured data is random with probability distribution dependent on the parameters of interest. A second approach is a set-membership approach that may assume that the measured data vector belongs to a set which depends on the parameter vector. In the present disclosure, the probabilistic approach may be employed for the approximation.

It may be noted that by incorporating knowledge of the physics informed part or the differential equations associated with the system, a need for large training datasets, such as the digital representation of time series data 116 for identifying the latent-space model may be reduced. Moreover, since the neural network model 106 performs operator learning, it enables the neural network model 106 to predict beyond a training horizon, and it may further be used for compressed sensing, estimation, and control of the system.

The linear predictor 110 of the neural network model 106 may be represented by the Koopman operator. The architecture of the Koopman operator is further described in FIG. 1B.

FIG. 1B shows a schematic diagram 100B of architecture of a Koopman operator, according to some embodiments of the present disclosure. The schematic diagram 100B shows the Koopman operator in a finite dimensional space, represented by a matrix K, which induces a finite-dimensional linear system.

The Koopman operator is defined as a foundation of to describe the latent-space model. The Koopman operator may be based on Hamiltonian systems to formulate the Koopman operator in discrete time. In certain cases, a continuous time formulation may be considered to formulate the Koopman operator.

Typically, the Hamiltonian system is a dynamical system governed by Hamilton's equations. Such a dynamical system describes the evolution of a physical system such as a planetary system or an electron in an electromagnetic field. Formally, the Hamiltonian system is a dynamical system characterized by a scalar function $H(q, p)$, also known as the Hamiltonian, wherein $p$ and $q$ are generalized coordinates. Further, a state of the system, $r$, is described by the generalized coordinates $p$ and $q$, corresponding to generalized momentum and position respectively. Both the generalized coordinates $p$ and $q$ are real-valued vectors with a same dimension $N$. Thus, the state of the system is completely described by a 2N-dimensional vector $r(q, p)$ and the evolution equations are given by Hamilton's equations as follows:

$$\frac{dp}{dt} = - \frac{\partial H}{\partial q} \qquad (1)$$

$$\frac{dq}{dt} = \frac{\partial H}{\partial p} \qquad (2)$$

The Hamiltonian system may be utilized to describe the evolution equations of a physical system such as the system with the non-linear dynamics. The advantage of the Hamiltonian system is that it gives important insights into the dynamics of the system, even if the initial value problem may be solved analytically.

In some embodiments the Koopman operator may be based on the continuous-time dynamical system. Considering the continuous-time dynamical system as follows:

$$\frac{dx}{dt} = f(x) \qquad (3)$$

with $x \in X \subseteq Rn$. Further, a time-t flow map operator $F^t : X \to X$ is defined as:

$$x(t_0+t) = F^t\big(x(t_0)\big) \qquad (4)$$

Moreover, an alternative description for the dynamical systems in terms of evolution of functions of possible measurements may be given as $y = g(x)$. The function $g : X \to R$ is called a measurement function and may belongs to some set of functions $G(x)$. Generally, the set of functions is often not defined a-priori, and other functions, such as Hilbert spaces or reproducing kernel Hilbert spaces (RKHS) are common choices as the functions. In all cases, however, $G(X)$ is of significantly higher dimension than X, thus, dimensionality may be traded for linearity. Furthermore, the Koopman operator K is an infinite-dimensional linear operator that acts on all observable functions such as to satisfy the following equation:

$$K^t g(x_0) = g(F^t(x_0)) = g \circ F^t = g(x(t_0+t)) \qquad (5)$$

The equation 5 may further be utilized in the dynamical systems with continuous spectra. Thus, a transformation from a state-space representation of the dynamical system to the Koopman representation trades nonlinear, finite-dimensional dynamics for linear, infinite-dimensional dynamics. The advantage of such a trade-off is that the linear differential equations may be solved using the spectral representation. In a practice scenario, a sufficiently large, but finite, sum of modes is used to approximate the Koopman spectral solution.

If the dynamics is sufficiently smooth, an infinitesimal generator $L$ of the Koopman operator family may be defined as:

$$Lg := \lim_{t \to 0} \frac{K^t g - g}{t} = \lim_{t \to 0} \frac{g \circ F^t - g}{t} \qquad (6)$$

From the equation 6, following may be observed:

$$Lg(x(t)) = \lim_{\tau \to 0} \frac{g(x(t+\tau)) - g(x(t))}{\tau} = \frac{d}{dt} g(x(t)) \qquad (7)$$

The generator L is sometimes referred to as a Lie operator. For example, the generator L is a Lie derivative of the function g along the vector field f(x) when the dynamics is given by dx/dt=f(x). On the other hand, the following equation is considered:

$$\frac{d}{dt} g(x(t)) = \nabla g.dx/dt = \nabla g.f(x(t)) \qquad (8)$$

Based on the equation 8, it may be concluded the following:

$$Lg = \nabla g.f \qquad (9)$$

Moreover, an applied Koopman analysis seeks key measurement functions that behave linearly in time, and the eigenfunctions of the Koopman operator are functions that exhibit such behavior. A Koopman eigenfunction $\varphi(x)$ corresponding to an eigenvalue $\lambda^t$ satisfies the following equation:

$$K^t \phi = \lambda^t . \phi(x) \qquad (10)$$

In some embodiments, the Koopman eigenfunctions $\varphi(x)$ may be demonstrated as eigenfunctions of the Lie operator L, although with a different eigenvalue, i.e.,

$$\mu = \log(\lambda^t)/t \qquad (11)$$

In such a case, the equation 11 may be rewritten as follows:

$$L\phi = \nabla\phi.f \qquad (12)$$

Equation 12 is referred as a dynamical system constraint (DSC) equation. Once a set of eigenfunctions $\{\varphi 1, \varphi 2, \cdots, \varphi M\}$ is obtained, observables that may be formed as a linear combination of the set of eigenfunctions, i.e., $g \in \text{span}\{\varphi k\}_{k=1}^{M}$ have a particularly simple evolution under the Koopman operator as follows:

$$g(x) = \sum_{k=1}^{M} c_k \phi_k \Longrightarrow K^t g(x) = \sum_{k=1}^{M} c_k \lambda_k^t \phi_k \qquad (13)$$

It may be implied from the equation 13 that $\mathrm{span}\{\varphi k\}_{k=1}^{M}$ is an invariant subspace under the Koopman operator $K^t$ and may be viewed as the new coordinates on which the dynamics of the system evolve linearly.

Since the goal of the disclosure is to is to study nonlinear dynamical systems using linear theory, the function g(x) may be generalized as follows:

$$g(x) = \psi(\varphi 1, \varphi 2, \cdots, \varphi M\ ;\omega) \qquad (14)$$

$$\Downarrow$$

$$K^t g(x) = \psi(\lambda_1^t \varphi 1, \lambda_2^t \varphi 2, \cdots, \lambda_M^t\ \varphi M\ ;\omega\ ;\omega) \qquad (15)$$

where $\psi$ is an arbitrary transformation parameterized by $\omega$. Equation is referred as an observable reconstruction equation (ORE).

Thus, the Koopman eigenfunctions are an important basis based on which any observable may be expressed, such as the ORE. The Koopman eigen function themselves are given by the DSC. It is observed in the transformation is that the finite-dimensional, non-linear dynamical system defined by the function f and the infinite-dimensional, linear dynamics defined by the Koopman equation are two equivalent representations of the same fundamental behavior. Moreover, the observables g and the associated Koopman mode expansion may be linked successfully to the original evolution defined by the function f. Importantly, the Koopman operator captures everything about the non-linear dynamical system, and the eigenfunctions define a nonlinear change of coordinates in which the system becomes linear.

It may be noted that if the observable functions g is restricted to an invariant subspace spanned by eigenfunctions of the Koopman operator, then it may induce a linear operator K that is finite dimensional and advances the eigen observable functions on this subspace. Such subspace is represented in the FIG. 1B.

Moreover, asymptotic methods may be used to approximate certain eigenfunctions for simple dynamics (e.g., polynomial nonlinear dynamics), however, there is no analytical procedure to seek for the eigen-pairs of Koopman operator in general. Some computational methods, for example, a dynamic mode decomposition (DMD) technique may be used to approximate eigenfunctions of Koopman operator. Details of the DMD technique are further provided, for example, in FIG. 2B.

FIG. 2A illustrates a schematic overview 200A of principles used for controlling the operation of the system, according to some embodiments of the present disclosure. The schematic overview 200A depicts a control apparatus 202 and a system 204. The system 204 may be the system with the non-linear dynamics. The control apparatus 202 may include a linear predictor 206. The linear predictor 206 may be same as the linear predictor 110 of FIG. 1A. The control apparatus 202 may further include a control unit 208 in communication with the linear predictor 206. The control unit 208 is analogous to the control unit 122 of FIG. 1A.

The control apparatus 202 may be configured to control continuously operating dynamical system, such as the system 204 in engineered processes and machines. Hereinafter, 'control apparatus' and 'apparatus' may be used interchangeable and would mean the same. Hereinafter, 'continuously operating dynamical system' and 'system' may be used interchangeably and would mean the same. Unclaimed examples of the system 204 include, but may not be limited to, light detection and ranging (LIDAR) systems, condensing units, production lines, self-tuning machines, smart grids, car engines, robots, numerically controlled machining, motors, satellites, power generators, and traffic networks. The control apparatus 202 or the control unit 208 may be configured to develop control policies, such as the estimation and control commands for controlling the system 204 using control actions in an optimum manner without delay or overshoot in the system 204 and ensuring control stability.

In some embodiments, the control unit 208 may be configured to generate the control commands for controlling the system 204 based on at least one of a model-based control and estimation technique or an optimization-based control and estimation technique, for example, a model predictive control (MPC) technique. The model-based control and estimation technique may be advantageous for control of the dynamic systems, such as the system 204. For example, the MPC technique may allow a model-based design framework in which the dynamics of the system 204 and constraints may directly be considered. The MPC technique may develop the control commands for controlling the system 204, based on the model of the latent space model or the linear predictor 206. The linear predictor 206 of the system 204 refers to dynamics of the system 204 described using linear differential equations.

In some embodiments, the control unit 208 may be configured to generate the control commands for controlling the system 204 based on a data-driven based control and estimation technique. The based control and estimation technique may exploit operational data generated by the system 204 in order to construct feedback control policy that stabilizes the system 204. For example, each state of the system 204 measured during the operation of the system 204 may be given as the feedback to control the system 204.

Typically, use of the operational data to design the control policies or the control commands is referred as the data-driven based control and estimation technique. The data-driven based control and estimation technique may be utilized to design the control policy from data and the data-driven control policy may further be used to control the system 204. Moreover, in contrast with such data-driven based control and estimation technique, some embodiments may use operational data to design a model, such as the linear predictor 206. The data-driven model, such as the linear predictor 206 may be used to control the system 204 using various model-based control methods. Further, the data-driven based control and estimation technique may be utilized to determine actual model of the system 204 from data, i.e., such a model that may be used to estimate behavior of the system 204 that has non-linear dynamics. In an example, the model of the system 204 may be determined from data that may capture dynamics of the system 204 using the differential equations. Furthermore, the model having physics based PDE model accuracy may be learned from the operational data.

Moreover, to simplify the computation of model generation, an ordinary linear differential equation (ODE) for the linear predictor 206 may be formulated to describe the dynamics of the system 204. In some embodiments, the ODE may be formulated using model reduction techniques. For example, the ODE may be reduced dimensions of the PDE, e.g., using proper orthogonal decomposition and Galerkin projection or DMD. Further, the ODE may be a part of the PDE, e.g., describing the boundary conditions. However, in some embodiments, the ODE may be unable to reproduce actual dynamics (i.e. the dynamics described by the PDE) of the system 204, in cases of uncertainty conditions. Examples of the uncertainty conditions may be a case where boundary conditions of the PDE may be changing over a time or a case where one of coefficients involved in the PDE may be changing.

Further, an example of the data-driven based control and estimation technique is provided in FIG. 2B. FIG. 2B illustrates a schematic diagram 200B that depicts an exemplary method to approximate the Koopman operator, according to some embodiments of the present disclosure. In some embodiments, the Koopman operator may be approximated by use of the data-driven approximation technique. The data-driven approximation technique may be generated using numerical or experimental snapshots. For example, a dynamic mode decomposition (DMD) approximation technique may be used as the data-driven approximation technique. The schematic diagram 200B includes snapshots 210, steps of algorithm 212, a set of modes 214, a predictive reconstruction 216 and shifted values 218 of the snapshots 210.

The DMD approximation technique may be utilized to approximate the Koopman operator for example, of a fluid over a cylinder. The DMD approximation technique is a dimensionality reduction algorithm. Typically, given a time series of the data, the DMD approximation technique computes the set of modes 214. Each mode of the set of modes 214 may be associated with a fixed oscillation frequency and a decay or growth rate. For linear systems, the set of modes 214 and the fixed oscillation frequency are analogous to normal modes of the system, but more generally, they may be analogous to approximations of the set of modes 214 and the eigenvalues of a composition operator (referred as the Koopman operator).

Furthermore, due to intrinsic temporal behaviors associated with each mode of the set of modes 214, the DMD approximation technique differs from other dimensionality reduction methods such as principal component analysis, that may compute orthogonal modes that lack predetermined temporal behaviors. As the set of modes 214 are not orthogonal, the DMD approximation technique-based representations may be less parsimonious than those generated by the principal component analysis. However, the DMD approximation technique may be more physically meaningful than the principal component analysis as each mode of the set of modes 214 is associated with a damped (or driven) sinusoidal behavior in time.

In the DMD approximation technique, the method to approximate the Koopman operator may start with collection of the snapshots 210 (such as images of the CFD simulation and experiments) and the shifted values 218 of the snapshots 210. For example, the snapshots 210 correspond to the digital representation of the time series data 116. The steps of algorithm 212 of the DMD approximation technique are described as follows:

| | |
|---|---|
| Approximate map | $X' \approx AX$ |
| Take singular value decomposition of X | $X \approx U\textstyle\sum V^*$ |
| Reduced matrix | $\tilde{A} \approx U^* X' V \textstyle\sum^{-1}$ |
| Eigen decomposition | $\tilde{A}W \approx W_\wedge$ |
| Compute set of modes (214) | $\emptyset = X' V \textstyle\sum^{-1} W$ |

In the steps of algorithm 212, the singular value decomposition of snapshot matrix is taken, and linear operator is approximated as a best A matrix, which minimizes the following equation:

$$||X' - AX|| \qquad\qquad (16)$$

Optionally, the matrix A may further be reduced by dropping one or more modes of the set of modes 214. The Eigen decomposition of such matrix A may provide the DMD eigen modes depicted in the set of modes 214. The matrix A may be used to reconstruct the data corresponding to the predictive reconstruction 216. The predictive reconstruction 216 may be output by the data assimilation module 120 of FIG. 1A. For example, the predictive reconstruction 216 may include the data associated with reconstruction of temperature and velocity of the room, for HVAC systems.

Typically, the DMD approximation technique utilizes a computational method to approximate the Koopman operator from the data. Advantageously, the DMD approximation technique possesses a simple formulation in terms of linear regression. Therefore, several methodological innovations have been introduced, for example, a sparsity promoting optimization may be used to identify the set of modes 214, the DMD approximation technique may be accelerated using randomized linear algebra, an extended DMD approximation technique may be utilized to include nonlinear measurements, a higher order DMD that acts on delayed coordinates may be used to generate more complex models of the linear predictor 206, a multiresolution DMD approximation technique with multiscale systems that exhibit transient or intermittent dynamics may be used, and the DMD approximation algorithm may be extended to disambiguate the natural dynamics and actuation of the system. The DMD approximation technique may further include a total least-squares DMD, a forward-backward DMD and variable projection that may improve the performance of DMD over noise sensitivity. Such methods may be utilized in various applications, such as fluid dynamics and heat transfer, epidemiology, neuroscience, finance, plasma physics, robotics and video processing.

In some embodiments, the Koopman operator may be approximated by use of a deep learning technique. In certain scenarios, the DMD approximation technique may be unable to represent the Koopman eigenfunctions. In such cases, the deep learning technique, such as neural network models may be utilized for approximating the Koopman operator, leading to linear embedding of the non-linear dynamics of the system 204. The deep learning technique may be successful in long-term dynamic predictions and the fluid control for the HVAC systems. The deep learning technique may further be extended to account for uncertainties, modeling PDEs and for optimal control of the system 204. Example of architecture of the neural network model, may include, but may not be limited to, neural ODEs for dictionary learning and graphical neural networks utilized for learning the compositional Koopman operators.

An example of the usage of the deep learning technique (or the neural network model) to approximate the Koopman operator is further provided in FIG. 2C.

FIG. 2C illustrates a schematic diagram 200C of an autoencoder architecture of the neural network model, according to some embodiments of the present disclosure. The deep neural network model may be utilized to learn linear basis and the Koopman operator using data of the snapshots 210. The schematic diagram 200C includes the autoencoder 108. The autoencoder 108 includes an encoder 220, a decoder 222 and a linear predictor 224. The linear predictor 224 may be same as the linear predictor 110 of FIG. 1A. The schematic diagram 200C further includes a linear predictor 226 and a linear predictor 228.

The autoencoder 108 may be a special type of neural network model suitable for the HVAC applications. The encoder 220 may be represented as "$\phi$". The encoder 220 learns the representation of the relevant Koopman eigenfunctions, that may provide intrinsic coordinates that linearize the dynamics of the system 204. The decoder 222 may be represented as "$\psi$" or "$\phi^{-1}$". The decoder 222 may seek an inverse transformation to reconstruct the original measurements of the dynamics of the system 204. Further, if the encoder 220 is defined as $\phi : x \to (\varphi1(x), \varphi2(x), ..., \varphi M(x))^T$, then up to a constant, the encoder 220 may learn such transformation "$\phi$" and the decoder 222 may learn the transformation "$\psi$" as shown in the observable reconstruction equation (ORE), such as in equation 15.

Moreover, within the latent space of the autoencoder 108, such as the linear predictor 224, the dynamics of the system 204 is constrained to be linear. Therefore, in some embodiments, a squared matrix "K" is used to drive the evolution of the dynamics of the system 204. Generally, there is no invariant, finite dimensional Koopman subspace that captures the evolution of all the measurements of the system 204, in such a case the squared matrix K may only approximate the true underlying linear operator.

Typically, the autoencoder 108 may be trained in a number of ways. Normally, the training dataset X is arranged as a three-dimensional (3D) tensor, with its dimensions to be (i) number of sequences (with different initial states), (ii) number of snapshots, and (iii) dimensionality of the measurements, respectively. Further, the constraint of linear dynamics may be enforced by a loss term resembling $\|\phi(xn+1) - K\phi(xn)\|$, that may be represented by the linear predictor 226, or linearity may be enforced over multiple steps resembling $\|\phi(xn+p) - K^p\phi(xn)\|$, that may be represented by the linear predictor 228, generating recurrencies in the neural network architecture or the autoencoder architecture. It should be noted that the linear predictor 226 and linear predictor 228 are considered as examples of the linear predictor 110.

FIG. 3 illustrates a block diagram 300 of an apparatus 302 for controlling the operation of a system, according to some embodiments of the present disclosure. The block diagram 300 may include the apparatus 302. The apparatus 302 may include an input interface 304, a processor 306, a memory 308 and a storage 310. The storage 310 may further include models 310a, a controller 310b, an updating module 310c and a control command module 310d. The apparatus 302 may further include a network interface controller 312 and an output interface 314. The block diagram 300 may further include a network 316, a state trajectory 318 and an actuator 322 associated with the system 204.

The apparatus 302 includes the input interface 304 and the output interface 314 for connecting the apparatus 302 with other systems and devices. In some embodiments, the apparatus 302 may include a plurality of input interfaces and a plurality of output interfaces. The input interface 304 is configured to receive the state trajectory 318 of the system 204. The input interface 304 includes the network interface controller (NIC) 312 adapted to connect the apparatus 302 through a bus to the network 316. Moreover, through the network 316, either wirelessly or through wires, the apparatus 302 receives the state trajectory 318 of the system 204.

The state trajectory 318 may be a plurality of states of the system 204 that defines an actual behavior of dynamics of the system 204. For example, the state trajectory 318 may act as a reference continuous state space for controlling the system 204. In some embodiments, the state trajectory 318 may be received from real-time measurements of parts of the system 204 states. In some other embodiments, the state trajectory 318 may be simulated using the PDE that describes the dynamics of the system 204. In some embodiments, a shape may be determined for the received state trajectory 318 as a function of time. The shape of the state trajectory 318 may represent an actual pattern of behavior of the system 204.

The apparatus 302 further includes the memory 308 for storing instructions that are executable by the processor 306. The processor 306 may be a single core processor, a multi-core processor, a computing cluster, or any number of other configurations. The memory 308 may include random access memory (RAM), read only memory (ROM), flash memory, or any other suitable memory system. The processor 306 is connected through the bus to one or more input and output devices. Further, the stored instructions implement a method for controlling the operations of the system 204.

The memory 308 may be further extended to include storage 310. The storage 310 may be configured to storage 310 models 310a, the controller 310b, the updating module 310c, and the control command module 310d.

The controller 310b may be configured to store instructions upon execution by the processor 306 that executes one or more modules in the storage 310. Moreover, the controller 310b administrates each module of the storage 310 to control the system 204.

Further, in some embodiments, the updating module 310c may be configured to update a gain associated with the model of the system 204. The gain may be determined by reducing an error between the state of the system 204 estimated with the models 310a and an actual state of the system 204. In some embodiments, the actual state of the system 204 may be a measured state. In some other embodiments, the actual state of the system 204 may be a state estimated with the PDE describing the dynamics of the system 204. In some embodiments, the updating module 310c may update the gain using an extremum seeking. In some other embodiments, the updating module 310c may update the gain using a Gaussian process-based optimization technique.

The control command module 310d may be configured to determine a control command based on the models 310a. The control command module 310d may control the operation of the system 204. In some embodiments, the operation of the system 204 may be subject to constraints. Moreover, the control command module 310d uses a predictive model-based control technique to determine the control command while enforcing constraints. The constraints include state constraints in continuous state space of the system 204 and control input constraints in continuous control input space of the system 204.

The output interface 314 is configured to transmit the control command to the actuator(s) 1220 of the system 204 to control the operation of the system 204. Some examples of the output interface 314 may include a control interface that submits the control command to control the system 204.

The control of the system 204 is further explained in FIG. 4. FIG. 4 illustrates a flowchart 400 of principles for controlling the operation of the system 204, according to some embodiments of the present disclosure. The flowchart 400 may include steps 402, 404 and 406.

In some embodiments, the system 204 may be modeled from physics laws. For instance, the dynamics of the system 204 may be represented by mathematical equations using the physics laws.

At step 402, the system 204 may be represented by a physics-based high dimension model. The physics-based high dimension model may be the partial differential equation (PDE) describing the dynamics of the system 204. The system 204 is considered to be the HVAC system, whose model is represented by Boussinesq equation. The Boussinesq equation may be obtained from the physics, which describes a coupling between airflow and the temperature in the room. Accordingly, the HVAC system model may be mathematically represented as:

$$\vec{u}_t = \mu \Delta \vec{u} - (\vec{u} \cdot \nabla)\vec{u} - \nabla p - g\beta\Delta T \qquad (17)$$

$$\nabla \cdot \vec{u} = 0 \qquad (18)$$

$$T_t = k\Delta T - u \cdot \nabla T \qquad\qquad (19)$$

where T is a temperature scalar variable, $\vec{u}$ is a velocity vector in three dimensions, $\mu$ is a viscosity and the reciprocal of the Reynolds number, k is a heat diffusion coefficient, p is a pressure scalar variable, $g$ is gravity acceleration, and $\beta$ is the expansion coefficient. The set of equations, such as equation 17, equation 1 and equation 19 are referred to as Navier-Stokes equation plus conservation of energy. In some embodiments, such combination is known as Boussinesq equation. Such equations are valid for cases where the variation of temperature or density of air compared to absolute values of a reference point, e.g., temperature or density of air at the corner of the room, are negligible. Similar equations may be derived when such assumption is not valid, thus compressible flow model needs to be derived. Moreover, the set of equations are subjected to appropriate boundary conditions. For example, the velocity or temperature of the HVAC unit may be considered as boundary condition.

The operator $\Delta$ and $\nabla$ may be defined in 3-dimensional room as:

$$\Delta = \nabla^2 \qquad\qquad (20)$$

$$\nabla = (\frac{\delta}{\delta x}, \frac{\delta}{\delta y}, \frac{\delta}{\delta z})T \qquad\qquad (21)$$

Some embodiments, refers to the governing equations in more abstract from of as follows:

i.

$$z_{k+1} = f(z_k), \qquad\qquad (22)$$

ii.

$$y_k = Cz_k, \qquad\qquad (23)$$

where $z_k \in \mathbb{R}^n$ and $y_k \in \mathbb{R}^p$ are respectively the state and measurement at time k, f: $\mathbb{R}^n \to \mathbb{R}^n$ is a time-invariant nonlinear map from current to next state, and $C \in \mathbb{R}^{p \times n}$ is a linear map from state to measurement.

In some embodiments such abstract dynamics may be obtained from a numerical discretization of a nonlinear partial differential equation (PDE), that typically requires a large number n of state dimensions.

In some embodiments, the physics-based high dimension model of the system 204 needs to be resolved to control the operations of the system 204 in real-time. For example, the Boussinesq equation needs to be resolved to control the airflow dynamics and the temperature in the room. In some embodiments, the physics-based high dimension model of the system 204 comprises a large number of equations and variables, that may be complicated to resolve. For instance, a larger computation power is required to resolve the physics-based high dimension model in real-time. Thus, the physics-based high dimension model of the system 204 may be simplified.

At step 404, the apparatus 302 is provided to generate the reduced order model to reproduce the dynamics of the system 204, such that the apparatus 302 controls the system 204 in efficient manner. In some embodiments, the apparatus 302 may simplify the physics-based high dimension model using model reduction techniques to generate the reduced order model. In some embodiments, the model reduction techniques reduce the dimensionality of the physics-based high dimension model (for instance, the variables of the PDE), such that the reduced order model may be used to in real-time for prediction and control of the system 204. Further, the generation of reduced order model for controlling the system 204 is explained in detail with reference to FIG.5. At step 406, the apparatus 302 uses the reduced order model in real-time to predict and control the system 204.

FIG. 5 illustrates a block diagram 500 that depicts generation of the reduced order model, according to some embodiments of the present disclosure. The linear predictor 110 is the reduced order model. The block diagram 500 depicts an architecture that includes the digital representation of the time series data 116, and the autoencoder 106. The autoencoder 106 includes the encoder 220, the decoder 222 and the linear predictor 224. The block diagram 500 further depicts an output 502 of the autoencoder 106.

The snapshots 210 of the CFD simulation or experiments are the data needed for the autoencoders, such as the autoencoder 106, which are neural network models as described in FIG 6. The latent space is governed by the linear ODE, that is to be learned based on both the snapshots 210 of the data and model information using the DSC equation, such as equation 12.

Moreover, for a given time-dependent differential equation (for example, ODE or PDE), there may be a set of feasible initial conditions. Some embodiments define the feasible initial conditions as the ones that may fall into the domain of the system dynamics $f$.

Typically, the domain of a function is a set of inputs accepted by the function. More precisely, given a function f: X →Y, the domain of f is X. The domain may be a part of the definition of a function rather than a property of it. In such a case X and Y are both subsets of R, and the function f may be graphed in a Cartesian coordinate system. In such a case, the domain is represented on an x-axis of the graph, as the projection of the graph of the function onto the x-axis.

The collocation points 118 may be samples extracted from the domain of the system dynamics $f$, such that in case of the PDEs, the collocation points 118 may satisfy the boundary conditions. For example, if the boundary conditions of the system dynamics $f$ are periodic, the collocation points 118 should be periodic. If the boundary conditions are Dirichlet, i.e. the system dynamics $f$ equals to certain values at its boundary points, the collocation point 118 should also be equal to such values at the correposnding boundary points. Advantageously, the collocation points 118 may be much computationally cheaper to be evaluated compared to the computation of the snapshots 210. The snapshots 210 may be generated either by a simulator or experiments, while the collocation points 118 may be generated simply by sampling them from a feasible function space.

Moreover, the function space is a set of functions between two fixed sets. Often, the domain and/or codomain may have additional that may be inherited by the function space. For example, the set of functions from any set X into a vector space has a natural vector space structure given by pointwise addition and scalar multiplication. In other scenarios, the function space might inherit a topological or metric structure.

The autoencoder 106 may receive the digital representation of the time series data 116 and the collocation points 118 projected into the differential equations. The encoder 220 encode the digital representation into the latent space. The linear predictor 224 may propagate the encoded digital representation into the latent space with the linear transformation determined by values of parameters of the linear predictor 224. Furthermore, the decoder 222 may the decode the linearly transformed encoded digital representation. The output 502 of the linearly transformed encoded digital representation may be the reconstructed snapshots or the decoded linearly transformed encoded digital representation.

A basic neural network model implemented for the architecture of the autoencoder 106 is described in FIG. 6. FIG. 6 illustrates a schematic diagram 600 of the neural network model, according to some embodiments of the present disclosure. The neural network may be a network or circuit of an artificial neural network, composed of artificial neurons or nodes. Thus, the neural network is an artificial neural network used for solving artificial intelligence (AI) problems. The connections of biological neurons are modeled in the artificial neural networks as weights between nodes. A positive weight reflects an excitatory connection, while a negative weight values mean inhibitory connections. All inputs 602 of the neural network model may be modified by a weight and summed. Such an activity is referred to as a linear combination. Finally, an activation function controls an amplitude of an output 604 of the neural network model. For example, an acceptable range of the output 604 is usually between 0 and 1, or it could be -1 and 1. The artificial networks may be used for predictive modeling, adaptive control and applications where they may be trained via a training dataset. Self-learning resulting from experience may occur within networks, which may derive conclusions from a complex and seemingly unrelated set of information.

The architecture of the blocks of the autoencoder 106 are described in FIGs. 7A, 7B and 7C.

FIG. 7A illustrates a diagram 700A that depicts input of the digital representation in the encoder 220 of the neural network model (such as the autoencoder 106), according to some embodiments of the present disclosure. The diagram 700A includes the encoder 220, the snapsots 210, the collocation points 118, and a last layer 702 of the encoder 220.

The input of encoder 220 may be either the snapshots 210 or the collocation points 118. The snapshots 210 may be for example the digital representation of time series data 116. The encoder 220 takes values of the the snapshots 210 or the collocation points 118. The encoder 220 outputs to the latent space or the linear predictor 224 through the last layer 702 of the encoder 220. The digital representation of time series data 116 indicative of the measurements of the operation of the system 204 at different instances of time may be collected. Further, for training of the neural network model (such as the autoencoder 106) having the autoencoder architecture, the encoder 220 may receive encode the digital representation into the latent space. The process of encoding is the model reduction.

FIG. 7B illustrates a diagram 700B that depicts propagation of the encoded digital representation into the latent space by the linear predictor 224 of the neural network model, according to some embodiments of the present disclosure. The diagram 700A includes the last layer 702 of the encoder 220, the linear predictor 224, and a last iteration 704 of the linear predictor 224 or the latent space model.

The linear predictor 224 is configured to propagate the encoded digital representation into the latent space with linear transformation determined by values of parameters of the linear predictor 224. The output of the last iteration 704 of the linear predictor 224 is passed to the decoder 222 of the neural network model. The process of propagating the encoded digital representation into the latent space is referred as reduced order model propagation or time integration.

FIG. 7C illustrates a diagram 700C depicting decoding of linearly transformd encoded digital representation by the decoder 222 of the neural network model, according to some embodiments of the present disclosure. The diagram 700C includes the decoder 222, the last iteration 704 of the linear predictor 224, and an output 706 of the decoder 222.

The decoder 222, puts forward the input and results in the output 706. The decoder is configured to decode the linearly transformed encoded digital representation to generate the output 706. The output 706 is the decoded linearly transformed encoded digital representation, such as the reconstructed snapshots as described in FIG. 5. The process of the decoding is the reconstruction of the snapshots.

The neural network model identifies a few key coordinates spanned by the set of Koopman eigenfunctions $\{\varphi 1, \varphi 2, \cdots, \varphi M\}$. The output of the encoder 220 is $z = \phi(x)$, where $x$ is the input comprising in general as the summation of the snapshots 210 and the collocation points 118. The dynamic within the latent space is linear and the output of the linear predictor 224 is given by $\dot{z} = Lz$, where $L$ is continuous Koopman operator and is parametrized by the neural network model. Furthermore, an inverse of $x = \psi(z)$. The neural network model is trained to minimize a loss function including a prediction error between outputs of the neural network model decoding measurements of the operation at the instant of time and measurements of the operation collected at the subsequent instance of time. The loss function further includes the residual factor of the PDE having eigenvalues dependent on the parameters of the linear predictor 224.

The loss function $J_{total}$ of the neural network model is given by the following equation:

$$J_{total} = J_{physics} + J_{data}$$

$$= \frac{1}{N}\sum_{i=1}^{N}(\omega_1||L\emptyset(x_i) - \nabla\emptyset(x_i) \cdot f(x_i)||^2 + \omega_2||x_i - \varphi(z_i)||^2$$

$$+ \frac{1}{p}\sum_{j=0}^{p}(\omega_3||e^{L\Delta t_j}(\emptyset(x(t_0)) - \emptyset(x(t_j))||^2 + \omega_4||x(t_j) - \varphi z(t_j)||^2$$

$$(24)$$

with following convention:

$\omega_1 \neq 0, \omega_2 \neq 0, \omega_3 = 0, \omega_4 = 0$: purely physics-informed
$\omega_1 = 0, \omega_2 = 0, \omega_3 \neq 0, \omega_4 \neq 0$: purely data-driven
$\omega_1 \neq 0, \omega_2 \neq 0, \omega_3 \neq 0, \omega_4 \neq 0$: hybrid learning
where N: the collocation points 118, p: the state trajectories (data generated from simulations), such as the state trajectory 318.

The first term in the loss function is called the physics-informed part since it is a function of the system dynamics $f$. It is based on the DSC. Since it is associated with a differentiation (gradient) $\nabla\phi$, we may use automatic differentiation as to measure variation of the system 204 with respect to the differential equations 114.

The physics-informed neural networks (PINNs) may seamlessly integrate the measurement data and physical governing laws by penalizing the residuals of the differential equation in the loss function using automatic differentiation. Such an approach alleviates the need for a large amount of data by assimilating the knowledge of the equations into the training process.

In some embodiments, the system 204 may be controlled by using a linear control law including a control matrix formed by the values of the parameters of the linear predictor 224.

The loss function may further be described as follows:

$$\text{Loss function} = ||x - \hat{x}||^2 + ||x(t + \Delta t) - \hat{x}(t + \Delta t)||^2 + (\text{Lie operator PDE})$$

$$(25)$$

The part $||x - \hat{x}||^2$ of the equation 25 refers to the reconstruction error. The part $+||x(t + \Delta t) - \hat{x}(t + \Delta t)||^2$ of the equation 25 refers to a prediction error parametrized on $\omega_i$. The Lie operator PDE is the residual factor of the PDE having eigenvalues dependent on the parameters of the linear predictor 224 and parametrized on $\omega_i$.

In the physics informed Koopman networks (PIKNs), such knowledge of the dynamics of the system 204 is leveraged to enforce the linearity constraint. The neural network model is trained by minimizing the quantity, i.e. the loss function $\|\varphi_K(x).f - \mu_K\varphi_K(x)\|$, k = 1, 2, 3, , M. The squared matrix L is used to approximate the Lie operator, which in turn is related to the Koopman operator, and term $\|L\phi(x) - \nabla\phi(x).f\|$ is minimized. In some embodiments, eigen-decomposition to the Lie operator is performed. The residual factor of the PDE is based on the Lie operator. For example, finding the eigenvalue and eigenfunction pairs of the Lie operator corresponds to performing eigen-decomposition to the squared matrix L.

FIG. 8 illustrates an exemplary diagram 800 for real-time implementation of the apparatus 302 for controlling the operation of the system 204, according to some embodiments of the present disclosure. The exemplary diagram 800 includes a room 802, a door 804, a window 806, a ventilation units 808, and a set of sensors 810.

The system 204 is an air conditioning system. The exemplary diagram 800 shows the room 802 that has the door 804 and at least one window 806. The temperature and the airflow of the room 802 are controlled by the apparatus 302 via the air conditioning system through ventilation units 808. The set of sensors 810 such as a sensor 810a and a sensor 810b are arranged in the room 802. The at least one airflow sensor, such as the sensor 810a is used for measuring velocity of the air flow at a given point in the room 802, and at least one temperature sensor, such as the sensor 810b is used for measuring the room temperature. It may be noted that other type of setting may be considered, for example a room with multiple HVAC units, or a house with multiple rooms.

The system 204 may be described by the physics-based model called the Boussinesq equation, as exemplary illustrated in FIG. 4. However, the Boussinesq equation contains infinite dimensions to resolve the Boussinesq equation for controlling the air-conditioning system. The model comprising the ODE. Data assimilation may also be added to the ODE model. The model reproduces the dynamics (for instance, an airflow dynamics) of the air conditioning system in an optimal manner. Further, in some embodiments, the model of the air flow dynamics connects the values of the air flow (for instance, the velocity of the air flow) and the temperature of the air conditioned room during the operation of the air conditioning system. Moreover, the apparatus 302 optimally controls the air-conditioning system to generate the airflow in a conditioned manner.

FIG. 9 illustrates a flow chart 900 depicting a method for training the neural network model, according to some embodiments of the present disclosure.

At step 902, the digital representation of time series data 116 indicative of measurements of the operation of the system 204 at different instances of time may be collected. Details of the collection of the digital representation of time series data 116 are further described, for example, in FIG. 2B.

At step 904, the neural network model 106 may be trained. The neural network model 106 has the autoencoder architecture including the encoder 220 configured to encode the digital representation into the latent space, the linear predictor 224 configured to propagate the encoded digital representation into the latent space with linear transformation determined by values of parameters of the linear predictor 224, and the decoder 222 configured to decode the linearly transformed encoded digital representation to minimize the loss function including the prediction error between outputs of the neural network model 106 decoding measurements of the operation at the instant of time and measurements of the operation collected at the subsequent instance of time, and the residual factor of the PDE having eigenvalues dependent on the parameters of the linear predictor 224.

Specific details are given in the following description to provide a thorough understanding of the embodiments. However, if understood by one of ordinary skill in the art, the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Individual embodiments above are described as a process which is depicted as a flowchart, a flow diagram, a data flow diagram, a structure diagram, or a block diagram. Although a flowchart shows the operations as a sequential process, many of the operations can be performed in parallel or concurrently. In addition, the order of the operations may be re-arranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Many modifications and other embodiments of the diclosure set forth herein will come to mind to one skilled in the art to which these disclosure pertain having the benefit of the teachings presented in the foregoing descriptions and the associated drawings. It is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims.

**Claims**

1. A control method for controlling an operation of a system (204), the system (204) being an air-conditioning system comprising ventilation units (808), an airflow sensor (810a) and a temperature sensor (810b), the system (204) having non-linear dynamics represented by partial differential equations (PDEs),
   the control method including a computer-implemented method of training a neural network model (106) for controlling the operation of the system having non-linear dynamics represented by partial differential equations (PDEs), the computer-implemented method of training the neural network model (106) comprising:

   collecting a digital representation of time series data (116) indicative of measurements of the operation of the system (204) at different instances of time; and
   training the neural network model (106) having an autoencoder architecture including an encoder configured to encode the digital representation into a latent space, a linear predictor (110) configured to propagate the encoded digital representation into the latent space with linear transformation determined by values of parameters of the linear predictor (110), and a decoder configured to decode the linearly transformed encoded digital representation to minimize a loss function including a prediction error between outputs of the neural network model (106) decoding measurements of the operation at an instant of time and measurements of the operation collected at a subsequent instance of time, and a residual factor of the PDE having eigenvalues dependent on the parameters of the linear predictor (110), wherein the residual factor of the PDE is based on a Lie operator, the computer-implemented method further comprising performing eigen-decomposition to the Lie operator;
   the control method further comprising controlling the system (204) to control a temperature and an airflow in a room through the ventilation units (808), by using a linear control law including a control matrix formed by the values of the parameters of the linear predictor (110).

2. The control method of claim 1, wherein the digital representation of the time series data (116) is obtained by use of computational fluid dynamics (CFD) simulation or experiments.

3. The control method of claim 1, wherein the linear predictor (110) is based on a reduced-order model, wherein the reduced-order model is represented by a Koopman operator.

4. The control method of claim 3, further comprising approximating the Koopman operator by use of a data-driven approximation technique, wherein the data-driven approximation technique is generated using numerical or experimental snapshots.

5. The control method of claim 3, further comprising approximating the Koopman operator by use of a deep learning technique.

6. The control method of claim 1, further comprising:

generating collocation points (118) associated with a function space of the system (204), based on the PDE, the digital representation of time series data (116) and the linearly transformed encoded digital representation; and training the neural network model (106) based on the generated collocation points (118).

7. The control method of claim 1, further comprising generating control commands to control the system (204) based on at least one of: a model-based control and estimation technique or an optimization-based control and estimation technique.

8. The control method of claim 1, further comprising generating control commands to control the system (204) based on a data-driven based control and estimation technique.

9. A training system for training a neural network model for controlling an operation of a system (204), the system (204) being an air-conditioning system comprising ventilation units (808) , an airflow sensor (810a) and a temperature sensor (810b), the system (204) having non-linear dynamics represented by partial differential equations (PDEs), the training system comprising at least one processor; and a memory having instructions stored thereon that, when executed by the at least one processor, cause the training system to (106):

collect a digital representation of time series data (116) indicative of measurements of the operation of the system at different instances of time; and
train the neural network model (106) having an autoencoder architecture including an encoder configured to encode the digital representation into a latent space, a linear predictor (110) configured to propagate the encoded digital representation into the latent space with linear transformation determined by values of parameters of the linear predictor (110), and a decoder configured to decode the linearly transformed encoded digital representation to minimize a loss function including a prediction error between outputs of the neural network model (106) decoding measurements of the operation at an instant of time and measurements of the operation collected at a subsequent instance of time, and a residual factor of the PDE having eigenvalues dependent on the parameters of the linear predictor (110), wherein the residual factor of the PDE is based on a Lie operator, the computer-implemented method further comprising performing eigen-decomposition to the Lie operator;
wherein the at least one processor is further configured to control the system (204) to control a temperature and an airflow in a room through the ventilation units (808), by using a linear control law including a control matrix formed by the values of the parameters of the linear predictor (110).

10. The training system of claim 9, wherein the digital representation of the time series data (116) is obtained by use of computational fluid dynamics (CFD) simulation or experiments.

11. The training system of claim 9, wherein the linear predictor (110) is based on a reduced-order model, wherein the reduced-order model is represented by a Koopman operator.

12. The training system of claim 11, wherein the at least one processor is further configured to approximate the Koopman operator by use of a data-driven approximation technique, and the data-driven approximation technique is generated using numerical or experimental snapshots, or wherein the at least one processor is further configured to approximate the Koopman operator by use of a deep learning technique.

13. The training system of claim 9, wherein the at least one processor is further configured to:

generate collocation points (118) associated with a function space of the system, based on the PDE, the digital representation of time series data (116) and the linearly transformed encoded digital representation; and train the neural network model (106) based on the generated collocation points (118).

14. The training system of claim 9, wherein the at least one processor is further configured to generate control commands to control the system based on at least one of: a model-based control and estimation technique or an optimization-based control and estimation technique.

15. A non-transitory computer readable storage medium comprising instructions which, when executed by a processor, cause the processor to perform a method of training a neural network model (106) for controlling an operation of a system, the system (204) being an air-conditioning system comprising ventilation units (808), an airflow sensor (810a) and a temperature sensor (810b), the system (204) having non-linear dynamics represented by partial differential equations (PDEs), the method comprising:

collecting a digital representation of time series data (116) indicative of measurements of the operation of the system at different instances of time; and
training the neural network model (106) having an autoencoder architecture including an encoder configured to encode the digital representation into a latent space, a linear predictor (110) configured to propagate the encoded digital representation into the latent space with linear transformation determined by values of parameters of the linear predictor (110), and a decoder configured to decode the linearly transformed encoded digital representation to minimize a loss function including a prediction error between outputs of the neural network model (106) decoding measurements of the operation at an instant of time and measurements of the operation collected at a subsequent instance of time, and a residual factor of the PDE having eigenvalues dependent on the parameters of the linear predictor (110), wherein the residual factor of the PDE is based on a Lie operator, the computer-implemented method further comprising performing eigen-decomposition to the Lie operator;
the non-transitory computer readable storage medium further comprising instructions which, when executed by the processor, cause the processor to generate control commands for controlling the system (204) to control a temperature and an airflow in a room through the ventilation units (808), by using a linear control law including a control matrix formed by the values of the parameters of the linear predictor (110).

**Patentansprüche**

1. Steuerungsverfahren zum Steuern eines Betriebs eines Systems (204), wobei das System (204) ein Klimaanlagensystem ist, das Lüftungseinheiten (808), einen Luftstromsensor (810a) und einen Temperatursensor (810b) umfasst, wobei das System (204) eine nichtlineare Dynamik aufweist, die durch partielle Differentialgleichungen (PDEs) dargestellt wird,
das Steuerungsverfahren ein computerimplementiertes Verfahren zum Trainieren eines neuronalen Netzwerkmodells (106) zum Steuern des Betriebs des Systems mit nichtlinearer Dynamik, die durch partielle Differentialgleichungen (PDEs) dargestellt wird, umfasst, wobei das computerimplementierte Verfahren zum Trainieren des neuronalen Netzwerkmodells (106) umfasst:

Beschaffen einer digitalen Darstellung von Zeitreihendaten (116), die Messungen des Betriebs des Systems (204) zu verschiedenen Zeitpunkten anzeigen; und
Trainieren des neuronalen Netzwerkmodells (106) mit einer Autoencoder-Architektur, die einen Kodierer, der eingerichtet ist, die digitale Darstellung in einen latenten Raum zu kodieren, einen linearen Prädiktor (110), der eingerichtet ist, die kodierte digitale Darstellung in den latenten Raum mit einer linearen Transformation zu übertragen, die durch Werte von Parametern des linearen Prädiktors (110) bestimmt wird, und einen Dekodierer umfasst, der eingerichtet ist, die linear transformierte kodierte digitale Darstellung zu dekodieren, um eine Verlustfunktion zu minimieren, die einen Vorhersagefehler zwischen Ausgaben des neuronalen Netzwerkmodells (106), das Messungen des Betriebs zu einem Zeitpunkt und Messungen des Betriebs, die zu einem anschließenden Zeitpunkt beschafft wurden, dekodiert, und einen Restfaktor der PDE mit Eigenwerten, die von den Parametern des linearen Prädiktors (110) abhängen, umfasst, wobei der Restfaktor der PDE auf einem Lie-Operator basiert, wobei das computerimplementierte Verfahren ferner die Durchführung einer Eigenwertzerlegung für den Lie-Operator umfasst;
wobei das Steuerungsverfahren ferner die Steuerung des Systems (204) umfasst, um eine Temperatur und einen Luftstrom in einem Raum durch die Lüftungseinheiten (808) zu steuern, indem ein lineares Steuerungsgesetz verwendet wird, das eine Steuermatrix enthält, die durch die Werte der Parameter des linearen Prädiktors (110) gebildet wird.

2. Steuerungsverfahren nach Anspruch 1, wobei die digitale Darstellung der Zeitreihendaten (116) durch Verwendung einer numerischen Strömungsmechanik (CFD)-Simulation oder von Experimenten erhalten wird.

3. Steuerungsverfahren nach Anspruch 1, wobei der lineare Prädiktor (110) auf einer Modellierung mit reduzierter Ordnung basiert, wobei die Modellierung mit reduzierter Ordnung durch einen Koopman-Operator dargestellt wird.

4. Steuerungsverfahren nach Anspruch 3, ferner Annähern des Koopman-Operators unter Verwendung einer datengesteuerten Näherungstechnik umfassend, wobei die datengesteuerte Näherungstechnik unter Verwendung numerischer oder experimenteller Momentaufnahmen erzeugt wird.

5. Steuerungsverfahren nach Anspruch 3, ferner Annähern des Koopman-Operators unter Verwendung einer Deep-Learning-Technik umfassend.

6. Steuerungsverfahren nach Anspruch 1, ferner umfassend:

Erzeugen von Kollokationspunkten (118), die mit einem Funktionenraum des Systems (204) assoziiert sind, auf der Grundlage der PDE, der digitalen Darstellung von Zeitreihendaten (116) und der linear transformierten kodierten digitalen Darstellung; und
Trainieren des neuronalen Netzwerkmodells (106) auf der Grundlage der erzeugten Kollokationspunkte (118).

7. Steuerungsverfahren nach Anspruch 1, ferner das Erzeugen von Steuerbefehlen zum Steuern des Systems (204) basierend auf mindestens einer von: einer modellbasierten Steuerungs- und Schätztechnik oder einer optimierungsbasierten Steuerungs- und Schätztechnik umfassend.

8. Steuerungsverfahren nach Anspruch 1, ferner das Erzeugen von Steuerbefehlen zum Steuern des Systems (204) basierend auf einer datengesteuerten Steuerungs- und Schätztechnik.

9. Trainingssystem zum Trainieren eines neuronalen Netzwerkmodells zum Steuern des Betriebs eines Systems (204), wobei das System (204) ein Klimaanlagensystem ist, das Lüftungseinheiten (808), einen Luftstromsensor (810a) und einen Temperatursensor (810b) umfasst, wobei das System (204) eine nichtlineare Dynamik aufweist, die durch partielle Differentialgleichungen (PDEs) dargestellt wird, wobei das Trainingssystem mindestens einen Prozessor und einen Speicher mit darauf gespeicherten Anweisungen umfasst, die, wenn sie von dem mindestens einen Prozessor ausgeführt werden, das Trainingssystem veranlassen zum (106):

Beschaffen einer digitalen Darstellung von Zeitreihendaten (116), die Messungen des Betriebs des Systems zu verschiedenen Zeitpunkten anzeigen; und
Trainieren des neuronalen Netzwerkmodells (106) mit einer Autoencoder-Architektur, die einen Kodierer, der eingerichtet ist, die digitale Darstellung in einen latenten Raum zu kodieren, einen linearen Prädiktor (110), der eingerichtet ist, die kodierte digitale Darstellung in den latenten Raum mit einer linearen Transformation auszubreiten, die durch Werte von Parametern des linearen Prädiktors (110) bestimmt wird, und einen Dekodierer umfasst, der eingerichtet ist, die linear transformierte kodierte digitale Darstellung zu dekodieren, um eine Verlustfunktion zu minimieren, die einen Vorhersagefehler zwischen Ausgaben des neuronalen Netzwerkmodells (106), das Messungen des Betriebs zu einem Zeitpunkt und Messungen des Betriebs, die zu einem anschließenden Zeitpunkt beschafft wurden, dekodiert, und einen Restfaktor der PDE mit Eigenwerten, die von den Parametern des linearen Prädiktors (110) abhängen, umfasst, wobei der Restfaktor der PDE auf einem Lie-Operator basiert, wobei das computerimplementierte Verfahren ferner die Durchführung einer Eigenwertzerlegung für den Lie-Operator umfasst;
wobei der mindestens eine Prozessor ferner eingerichtet ist, das System (204) zu steuern, um eine Temperatur und einen Luftstrom in einem Raum durch die Lüftungseinheiten (808) zu steuern, indem er ein lineares Steuergesetz verwendet, das eine Steuermatrix enthält, die durch die Werte der Parameter des linearen Prädiktors (110) gebildet wird.

10. Trainingssystem nach Anspruch 9,
wobei die digitale Darstellung der Zeitreihendaten (116) durch Verwendung einer numerischen Strömungsmechanik (CFD)-Simulation oder von Experimenten erhalten wird.

**11.** Trainingssystem nach Anspruch 9, wobei der lineare Prädiktor (110) auf einer Modellierung mit reduzierter Ordnung basiert, wobei die Modellierung mit reduzierter Ordnung durch einen Koopman-Operator dargestellt wird.

**12.** Trainingssystem nach Anspruch 11, wobei der mindestens eine Prozessor eingerichtet ist, den Koopman-Operator unter Verwendung einer datengesteuerten Näherungstechnik anzunähern, und die datengesteuerte Näherungstechnik unter Verwendung numerischer oder experimenteller Momentaufnahmen erzeugt wird, oder wobei der mindestens eine Prozessor ferner eingerichtet ist, den Koopman-Operator unter Verwendung einer Deep-Learning-Technik zu anzunähern.

**13.** Trainingssystem nach Anspruch 9, wobei der mindestens eine Prozessor weiterhin eingerichtet ist zum:

Erzeugen von Kollokationspunkten (118), die mit einem Funktionenraum des Systems assoziiert sind, auf der Grundlage der PDE, der digitalen Darstellung von Zeitreihendaten (116) und der linear transformierten kodierten digitalen Darstellung; und
Trainieren des neuronalen Netzwerkmodells (106) auf der Grundlage der erzeugten Kollokationspunkte (118).

**14.** Trainingssystem nach Anspruch 9, wobei der mindestens eine Prozessor ferner eingerichtet ist, Steuerbefehle zum Steuern des Systems basierend auf mindestens einer von: einer modellbasierten Steuerungs- und Schätztechnik oder einer optimierungsbasierten Steuerungs- und Schätztechnik zu erzeugen.

**15.** Nicht-transitorisches computerlesbares Speichermedium, das Anweisungen enthält, die, wenn sie von einem Prozessor ausgeführt werden, den Prozessor veranlassen, ein Verfahren zum Trainieren eines neuronalen Netzwerkmodells (106) zum Steuern eines Betriebs eines Systems auszuführen, wobei das System (204) ein Klimaanlagensystem ist, das Lüftungseinheiten (808), einen Luftstromsensor (810a) und einen Temperatursensor (810b) umfasst, wobei das System (204) eine nichtlineare Dynamik aufweist, die durch partielle Differentialgleichungen (PDEs) dargestellt wird, wobei das Verfahren umfasst:

Beschaffen einer digitalen Darstellung von Zeitreihendaten (116), die Messungen des Betriebs des Systems zu verschiedenen Zeitpunkten anzeigen; und
Trainieren des neuronalen Netzwerkmodells (106) mit einer Autoencoder-Architektur, die einen Kodierer, der eingerichtet ist, die digitale Darstellung in einen latenten Raum zu kodieren, einen linearen Prädiktor (110), der eingerichtet ist, die kodierte digitale Darstellung in den latenten Raum mit einer linearen Transformation zu übertragen, die durch Werte von Parametern des linearen Prädiktors (110) bestimmt wird, und einen Dekodierer umfasst, der eingerichtet ist, die linear transformierte kodierte digitale Darstellung zu dekodieren, um eine Verlustfunktion zu minimieren, die einen Vorhersagefehler zwischen Ausgaben des neuronalen Netzwerkmodells (106), das Messungen des Betriebs zu einem Zeitpunkt, und Messungen des Betriebs, die zu einem anschließenden Zeitpunkt beschafft wurden, dekodiert, und einen Restfaktor der PDE mit Eigenwerten, die von den Parametern des linearen Prädiktors (110) abhängen, umfasst, wobei der Restfaktor der PDE auf einem Lie-Operator basiert, wobei das computerimplementierte Verfahren ferner die Durchführung einer Eigenwertzerlegung für den Lie-Operator umfasst;
das nichttransitorische computerlesbare Speichermedium ferner Anweisungen umfasst, die, wenn sie von dem Prozessor ausgeführt werden, den Prozessor veranlassen, Steuerbefehle zum Steuern des Systems (204) zu erzeugen, um eine Temperatur und einen Luftstrom in einem Raum durch die Lüftungseinheiten (808) zu steuern, indem ein lineares Steuergesetz verwendet wird, das eine Steuermatrix enthält, die durch die Werte der Parameter des linearen Prädiktors (110) gebildet wird.

## Revendications

**1.** Procédé de commande pour commander un fonctionnement d'un système (204), le système (204) étant un système de climatisation comprenant des unités de ventilation (808), un capteur de flux d'air (810a) et un capteur de température (810b), le système (204) présentant une dynamique non linéaire représentée par des équations différentielles partielles (PDE),
le procédé de commande incluant un procédé mis en œuvre par ordinateur d'apprentissage d'un modèle de réseau neuronal (106) pour commander le fonctionnement du système présentant une dynamique non linéaire représentée par des équations différentielles partielles (PDE), le procédé mis en œuvre par ordinateur de formation du modèle de réseau neuronal (106) comprenant les étapes consistant à :

collecter une représentation numérique de données de série chronologique (116) indicatives de mesures du fonctionnement du système (204) à différentes instances de temps ; et

former le modèle de réseau neuronal (106) présentant une architecture d'auto-codeur incluant un codeur configuré pour coder la représentation numérique dans un espace latent, un prédicteur linéaire (110) configuré pour propager la représentation numérique codée dans l'espace latent avec une transformation linéaire déterminée par des valeurs de paramètres du prédicteur linéaire (110), et un décodeur configuré pour décoder la représentation numérique codée à transformation linéaire afin de minimiser une fonction de perte incluant une erreur de prédiction entre des sorties du modèle de réseau neuronal (106) décodant des mesures du fonctionnement à une instance de temps et des mesures de l'opération collectées à une instance de temps ultérieure, et un facteur résiduel de la PDE présentant des valeurs propres dépendant des paramètres du prédicteur linéaire (110), dans lequel le facteur résiduel de la PDE est basé sur un opérateur de Lie, le procédé mis en œuvre par ordinateur comprenant en outre la réalisation d'une décomposition propre à l'opérateur de Lie ;

le procédé de commande comprenant en outre une commande du système (204) pour commander une température et un flux d'air dans une pièce via les unités de ventilation (808), en utilisant une loi de commande linéaire incluant une matrice de commande formée par les valeurs des paramètres du prédicteur linéaire (110).

2.  Procédé de commande selon la revendication 1, dans lequel la représentation numérique des données de série temporelle (116) est obtenue en utilisant une simulation ou des expériences de dynamique des fluides de calcul (CFD).

3.  Procédé de commande selon la revendication 1, dans lequel le prédicteur linéaire (110) est basé sur un modèle d'ordre réduit, dans lequel le modèle d'ordre réduit est représenté par un opérateur de Koopman.

4.  Procédé de commande selon la revendication 3, comprenant en outre une approximation de l'opérateur de Koopman en utilisant une technique d'approximation pilotée sur des données, dans lequel la technique d'approximation pilotée par des données est générée en utilisant des instantanés numériques ou expérimentaux.

5.  Procédé de commande selon la revendication 3, comprenant en outre une approximation de l'opérateur de Koopman en utilisant une technique d'apprentissage profond.

6.  Procédé de commande selon la revendication 1, comprenant en outre les étapes consistant à :

générer les points de collocation (118) associés à un espace de fonction du système (204), sur la base de la PDE, de la représentation numérique de données de série temporelle (116) et de la représentation numérique codée à transformation linéaire ; et

former le modèle de réseau neuronal (106) sur la base des points de collocation générés (118).

7.  Procédé de commande selon la revendication 1, comprenant en outre une génération d'instructions de commande pour commander le système (204) sur la base d'au moins une parmi : une technique de commande et d'estimation basée sur un modèle ou une technique de commande et d'estimation basée sur une optimisation.

8.  Procédé de commande selon la revendication 1, comprenant en outre une génération d'instructions de commande pour commander le système (204) sur la base d'une technique de commande et d'estimation basée sur des données.

9.  Système de formation pour former un modèle de réseau neuronal pour commander un fonctionnement d'un système (204), le système (204) étant un système de climatisation comprenant des unités de ventilation (808), un capteur de flux d'air (810a) et un capteur de température (810b), le système (204) présentant une dynamique non linéaire représentée par des équations différentielles partielles (PDE), le système de formation comprenant au moins un processeur ; et une mémoire sur laquelle sont stockées des instructions qui, lorsqu'elles sont exécutées par le au moins un processeur, amènent le système de formation à (106) :

collecter une représentation numérique de données de série chronologique (116) indicatives de mesures du fonctionnement du système à différentes instances de temps ; et

former le modèle de réseau neuronal (106) présentant une architecture d'auto-codeur incluant un codeur configuré pour coder la représentation numérique dans un espace latent, un prédicteur linéaire (110) configuré pour propager la représentation numérique codée dans l'espace latent avec une transformation linéaire déterminée par des valeurs de paramètres du prédicteur linéaire (110), et un décodeur configuré pour décoder la représentation numérique codée à transformation linéaire afin de minimiser une fonction de perte incluant une erreur de prédiction entre des sorties du modèle de réseau neuronal (106) décodant des mesures du fonctionnement à une instance de temps et des mesures de l'opération collectées à une instance de temps ultérieure, et un facteur résiduel de la PDE présentant des valeurs propres dépendant des paramètres du prédicteur linéaire (110), dans lequel le facteur résiduel de la PDE est basé sur un opérateur de Lie, le procédé mis en œuvre par ordinateur comprenant en outre la réalisation d'une décomposition propre à l'opérateur de Lie ;
dans lequel au moins un processeur est en outre configuré pour commander le système (204) pour commander une température et un flux d'air dans une pièce via les unités de ventilation (808), en utilisant une loi de commande linéaire incluant une matrice de commande formée par les valeurs des paramètres du prédicteur linéaire (110).

10. Système de formation selon la revendication 9,
dans lequel la représentation numérique des données de série temporelle (116) est obtenue en utilisant une simulation ou des expériences de dynamique des fluides de calcul (CFD).

11. Système de formation selon la revendication 9, dans lequel le prédicteur linéaire (110) est basé sur un modèle d'ordre réduit, dans lequel le modèle d'ordre réduit est représenté par un opérateur de Koopman.

12. Système de formation selon la revendication 11, dans lequel au moins un processeur est en outre configuré pour une approximation de l'opérateur de Koopman en utilisant une technique d'approximation pilotée par des données, et la technique d'approximation pilotée par des données est générée en utilisant des instantanés numériques ou expérimentaux, ou
dans lequel au moins un processeur est en outre configuré pour une approximation de l'opérateur de Koopman en utilisant une technique d'apprentissage profond.

13. Système de formation selon la revendication 9, dans lequel au moins un processeur est en outre configuré pour :

générer les points de collocation (118) associés à un espace de fonction du système, sur la base de la PDE, de la représentation numérique de données de série temporelle (116) et de la représentation numérique codée à transformation linéaire ; et
former le modèle de réseau neuronal (106) sur la base des points de collocation générés (118).

14. Système de formation selon la revendication 9, dans lequel au moins un processeur est en outre configuré pour générer des instructions de commande pour commander le système sur la base d'au moins une parmi : une technique de commande et d'estimation basée sur un modèle ou une technique de commande et d'estimation basée sur une optimisation.

15. Support de stockage non transitoire lisible par ordinateur comprenant des instructions qui, lorsqu'elles sont exécutées par un processeur, amènent le processeur à exécuter un procédé de formation d'un modèle de réseau neuronal (106) pour commander un fonctionnement d'un système, le système (204) étant un système de climatisation comprenant des unités de ventilation (808), un capteur de flux d'air (810a) et un capteur de température (810b), le système (204) présentant une dynamique non linéaire représentée par des équations différentielles partielles (PDE), le procédé comprenant les étapes consistant à :

collecter une représentation numérique de données de série temporelle (116) indicatives de mesures du fonctionnement du système à différentes instances de temps ; et
former le modèle de réseau neuronal (106) présentant une architecture d'auto-codeur incluant un codeur configuré pour coder la représentation numérique dans un espace latent, un prédicteur linéaire (110) configuré pour propager la représentation numérique codée dans l'espace latent avec une transformation linéaire déterminée par des valeurs de paramètres du prédicteur linéaire (110), et un décodeur configuré pour décoder la représentation numérique codée à transformation linéaire afin de minimiser une fonction de perte incluant une erreur de prédiction entre des sorties du modèle de réseau neuronal (106) décodant des mesures du fonctionnement à une instance de temps et des mesures de l'opération collectées à une instance de temps ultérieure, et un facteur résiduel de la PDE présentant des valeurs propres dépendant des paramètres du prédicteur linéaire (110), dans lequel le facteur résiduel de la PDE est basé sur un opérateur de Lie, le procédé mis en œuvre par ordinateur comprenant en outre la réalisation d'une décomposition propre à l'opérateur de Lie ;
le support de stockage lisible par ordinateur non transitoire comprenant en outre des instructions qui, lorsqu'elles sont exécutées par le processeur, amènent le processeur à générer des instructions de commande pour commander le système (204) afin de commander une température et un flux d'air dans une pièce via les unités de ventilation (808), en utilisant une loi de commande linéaire incluant une matrice de commande formée par les valeurs des paramètres du prédicteur linéaire (110).

**FIG.1A**

**100A**

## FIG.1B

$$F_t : x_k \mapsto x_{k+1}$$

$$g : x_k \mapsto y_k$$

$$K_t : y_k \mapsto y_{k+1}$$

FIG.2A

200A

202

EP 4 402 608 B1

```
┌──────────┐       ┌─────────────────────────┐       ┌─────────────────────────────┐
│  System  │◄─────►│                         │◄─────►│     Control unit 208        │
│   204    │       │  Linear predictor 206   │       │  (Estimation and Control    │
│          │       │                         │       │        Commands)            │
└──────────┘       └─────────────────────────┘       └─────────────────────────────┘
```

FIG.2B

FIG.2C    200C

**a**

108 — Input $x_k$

Autoencoder:
$\varphi^{-1}(\varphi(x_k)) = x_k$
$\underbrace{\quad\quad}_{y_k}$

220

$y_k$

224

Output $x_k$

$\underbrace{\text{Encoder } y = \varphi(x)}$    222 $\underbrace{\text{Decoder } x = \varphi^{-1}(y)}$

**b**    Prediction: $\varphi^{-1}(K\varphi(x_k)) = x_{k+1}$

Input $x_k$

$\varphi$

$y_k \quad y_{k+1}$

$y_{k+1}$

$\underbrace{\quad}_{\text{K linear}}$

$\varphi^{-1}$

Output $x_{k+1}$

220    226    222
110

**c**    Linearity: $K\varphi(x_k) = \varphi(x_{k+1})$
Network outputs equivalent

$x_k$

$\varphi$

$y_k \quad y_{k+1}$

K

$x_{k+1}$

$\varphi$

$y_{k+1}$

220    110    228    222

EP 4 402 608 B1

**FIG.3**

300

302

304 — Input interface

306 — Processor

Network Interface Controller — 312

Network — 316

State trajectory — 318

310 — Storage

310a — Models

310b — Controller

310c — Updating module

310d — Control command module

Output interface — 314

Actuator (system) — 322

308 — Memory

EP 4 402 608 B1

# FIG.4

400

```
┌─────────────────────────────────┐
│         Physics-based           │
│     high dimensional model      │
└─────────────────────────────────┘
402
                 │
                 ▼
┌─────────────────────────────────┐
│      Latent-space model (LSM)   │
└─────────────────────────────────┘
404
                 │
                 ▼
┌─────────────────────────────────┐
│       Prediction and control    │
└─────────────────────────────────┘
406
```

EP 4 402 608 B1

**FIG.5**

500

diagram

Digital representation of Time series data <u>116</u>

Collocation points <u>118</u> projected into differential equations

Encoder <u>220</u>

Linear Predictor <u>224</u>

Decoder <u>222</u>

106

Output <u>502</u> (reconstruction of snapshots)

FIG.6

600

602

604

Input layer

Hidden layer

Output layer

Network inputs

Network outputs

$x_1$ → 1
$x_2$ → 2
$x_N$ → N

1
2
L

1 → $y_1$
2 → $y_2$
K → $y_K$

Bias Node

Bias Node

EP 4 402 608 B1

32

FIG.7A

700A

Input $\mathbf{x}(t)$

Snapshots 210

Collocation points 118

220

702

33

FIG.7B

700B

702

704

224

EP 4 402 608 B1

FIG.7C

700C

222

704

706

EP 4 402 608 B1

FIG.8

# FIG.9

900

COLLECTING DIGITAL REPRESENTATION OF TIME SERIES DATA INDICATIVE OF MEASUREMENTS OF OPERATION OF SYSTEM AT DIFFERENT INSTANCES OF TIME — 902

TRAINING NEURAL NETWORK MODEL HAVING AUTOENCODER ARCHITECTURE INCLUDING ENCODER CONFIGURED TO ENCODE DIGITAL REPRESENTATION INTO LATENT SPACE, LINEAR PREDICTOR CONFIGURED TO PROPAGATE ENCODED DIGITAL REPRESENTATION INTO LATENT SPACE WITH LINEAR TRANSFORMATION DETERMINED BY VALUES OF PARAMETERS OF LINEAR PREDICTOR, AND DECODER CONFIGURED TO DECODE LINEARLY TRANSFORMED ENCODED DIGITAL REPRESENTATION TO MINIMIZE LOSS FUNCTION — 904

EP 4 402 608 B1

**EP 4 402 608 B1**

**Non-patent literature cited in the description**

- Neural Koopman Lyapunov Control. **VRUSHABH ZINAGE et al.** ARXIV.ORG. CORNELL UNIVERSITY LIBRARY, 201 OLIN LIBRARY CORNELL UNIVERSITY, 13 January 2022